# EUROPEAN PATENT SPECIFICATION

(11) **EP 2 383 473 B1**
(45) Date of publication and mention of the grant of the patent: **05.08.2020**
(21) Application number: 11174878.6
(22) Date of filing: 14.11.2008
(51) Int. Cl.: F04D 29/38, F04D 29/32, F04D 29/054, F04D 29/26, F04D 29/64

(54) **Propeller fan**
Propellergebläse
Ventilateur hélicoïde

(30) Priority: 22.10.2008 JP 2008272314; 22.10.2008 JP 2008272354
(43) Date of publication of application: 02.11.2011
(62) Divisional of application: 08877567.1
(73) Proprietor: Sharp Kabushiki Kaisha, Sakai-City, Osaka 590-8522 (JP)
(72) Inventor: Takeda, Yasukata, Osaka 590-8522 (JP); Ohtsuka, Masaki, Osaka 590-8522 (JP)
(74) Representative: Treeby, Philip David William

(56) References cited:
- GB-A- 601 160
- JP-A- H0 874 790
- JP-A- H09 228 995
- JP-A- 2002 357 197
- JP-A- 2003 278 696
- JP-A- 2003 343 489

## Description

### TECHNICAL FIELD

The present invention relates to a propeller fan. A fluid feeder a molding die, a propeller fan for an air blower, a molding die for molding the propeller fan from resin and a fluid feeder provided with the propeller fan such as an outdoor unit of an air conditioner, an air purifier, a humidifier, a fan heater, a cooling device and a ventilating device, are other aspects of the disclosure.

### BACKGROUND ART

In connection with conventional propeller fans, for example, Japanese Patent Laying-Open No. 3-88999 has disclosed an axial fan aimed at increasing a lifting power of propeller blades and also increasing a strength thereof by supplying, in a separated fashion, positive and negative pressures to positive and suction surfaces of each propeller blade, respectively (Patent Document 1). The axial fan disclosed in Patent Document 1 has a plurality of propeller blades that are formed on an outer periphery of a hub and extend radially outward from an axis of the hub.

Japanese Patent Laying-Open No. 2000-314399 has disclosed a propeller fan aimed at eliminating necessity of after-treatment on a boss having a rotation axis aperture, and improving gate processing (Patent Document 2). The propeller fan disclosed in Patent Document 2 has the hub of a cylindrical or a circular-conical form as well as blades formed integrally with the hub.

Japanese Patent Laying-Open No. 6-74196 has disclosed a propeller fan aimed at providing a form of a hub that improves air flowing, exhibiting a good performance in connection with improvement of forms of blades and a head, a rib and a boss of the hub, allowing an easy manufacturing operation, improving a stacking property and an improved strength, and exhibiting a good transporting property (Patent Document 3). The propeller fan disclosed in Patent Document 3 has a boss arranged at a center of rotation. The boss has an outer surface formed of a large round head and a cylindrical portion. In a manufacturing process of the propeller fan, the round head serves as a guide so that the manufactured propeller fans can be successively and deeply stacked on each other.

Japanese Patent Laying-Open No. 5-133392 has disclosed an axial blade wheel that is aimed at achieving an inexpensive and efficient packing without impeding any blowing performance (Patent Document 4). In the axial blade wheel disclosed in Patent Document 4, a radius of a hub on an intake side is partially reduced, and each end of the hub has a round from.

JP2003-278696A relates to a propeller fan having a plurality of blades in the outer circumference of a hub. A serrate small wing is arranged as a boundary layer controlling means preventing separation of the flow in the front edge in the rotation direction of each blade, and a triangular pyramid projection part swelling on the face (negative pressure face side) of the small wing is formed.

JP2003-343489A relates to an air blower having a plurality of vanes which are projected around a boss part. Each blade rotates and sends air, and is equipped with at least one recessed part which makes a trailing edge part of the vane a form recessed toward the leading edge side. The length from the line connecting each both ends of the recessed part to each deepest part is constituted so as to be 0.06 to 0.14 times of the outside diameter of the fan consisting of the outer periphery of the vane. The length of the trailing edge including the recessed part is made to be 0.39 to 0.49 times of the outside diameter of the fan. The length of the recessed part is made to be 0.895 to 0.915 times of the length of the trailing edge. The length of the trailing edge including the recessed part 3a is made to be 0.93 to 1.21 times of the length of the leading edge.

Other relevant prior art documents are GB601160 A, JP2002357197 A, JPH09228995 A and JPH0874790 A.

### DISCLOSURE OF THE INVENTION

### PROBLEMS TO BE SOLVED BY THE INVENTION

Conventionally, propeller fans have been used in air blowers and refrigeration machines. For example, an outdoor unit of an air conditioner is provided with a propeller fan for blowing air on a heat exchanger. The propeller fan has such characteristics that the blowing capacity near a center of the fan where a peripheral speed is low is smaller than that on a radially outer side of the fan. Due to such characteristics, when a resistance object causing a large pressure loss such as a heat exchanger is arranged in an air flow passage, the air flows forward on the radially outer side of the fan, but a reverse flow occurs near the center of the fan. This results in a problem that pressure-flow rate characteristics (i.e., characteristics relating to a pressure and a flow rate) of the fan deteriorate in a high static-pressure range.

Also, as disclosed in the foregoing patent documents, such a structure of the propeller fan has been known that a large boss hub is arranged at the center of rotation, and the plurality of blades extend from the outer periphery of the boss hub. In these propeller fans, since the large boss hub closes a reverse flow region near the center of the fan, it is possible to prevent reverse flow and to suppress deterioration of the pressure-flow rate characteristics of the fan near a high static-pressure range. Usually, the blade has an attack angle. Therefore, base portions of the blades exhibit a twisted positional relationship if the base portions of the blades extend as there are. However, the provision of the large boss hub facilitates the integral formation of the plurality of blades that perform the air blowing.

However, the above propeller fan with the large boss hub suffers from a plurality of problems described below.

A first problem is as follows. It is possible to suppress the deterioration of the pressure-flow rate characteristics in the high static-pressure range to a certain extent. However, the rotation center portion cannot be sufficiently and effectively utilized in a range of a low pressure and a large air flow rate, resulting in a problem that a blowing efficiency is low. A second problem is as follows. The provision of the large boss hub increases a mass of the propeller fan, and therefore increases the load on a drive motor, resulting in a problem of increased power consumption. A third problem is increase in material cost and therefore increase in manufacturing cost. These three problems result in remarkable disadvantages in energy-saving properties and resource-saving design in view of recent consideration of global environment.

As disclosed in above Patent Documents 3 and 4, the propeller fan requires the structure that allows stable stacking of the plurality of propeller fans in the direction of its rotation axis when the manufactured propeller fans are to be stored or transported.

Accordingly, an object of the invention is to overcome the above problems, and particularly to provide a propeller fan greatly contributing to energy-saving properties and resource-saving design. Another object of the invention is to overcome the above problems, and particularly to provide a propeller fan that greatly contributes to energy-saving properties and resource-saving design, and allows stacking for storing, transporting and the like.

### MEANS FOR SOLVING THE PROBLEMS

In accordance with the present invention, there is a propeller fan as set out in claim 1. According to the propeller fan thus configured, the front edge is provided with the first convex portion protruding toward the intake side of the blade, the first convex portion forms a vortex, which flows on the blade surface along a flow line to prevent separation of the flow on the blade surface. Therefore, the performance and efficiency of the propeller fan can be improved, and noises due to the separation can be reduced, resulting in reduction of the fan noises. Other aspects of the invention are set out in the dependent claims.

Preferably, a rear edge is provided with a second convex portion protruding oppositely to the rotational direction of the blade. According to the propeller fan thus configured, the portion provided with the second convex portion increases a chord length so that the blowing can be performed by a larger force.

Preferably, a coupling portion between the rear edge and an outer peripheral portion of the blade is provided with a third convex portion protruding oppositely to the rotational direction of the blade. According to the propeller fan thus configured, the portion provided with the third convex portion increases a chord length so that the blowing can be performed by a larger force.

### EFFECTS OF THE INVENTION

As described above, the invention can provide the propeller fan greatly contributing to the energy-saving properties and the resource-saving design. Also, the invention can provide the propeller fan that greatly contributes to the energy-saving properties and the resource-saving design, and allows stacking for the storing or transporting.

In the remainder of the description, reference is made to "embodiments (of the invention)", which are according to the present invention and "examples (related to the invention)", these are only reference examples which are not according to the invention. The scope of the invention is solely defined by the appended claims.

### BRIEF DESCRIPTION OF THE DRAWINGS

Fig. 1 is a side view showing a propeller fan according to a first example related to the invention.
Fig. 2 is a plan showing the propeller fan viewed in a direction (from an intake side) of an arrow II in Fig. 1.
Fig. 3 is a plan showing the propeller fan viewed in a direction (from an outlet side) of an arrow III in Fig. 1.
Fig. 4 is a perspective view of the propeller fan in Fig. 1 viewed from the intake side.
Fig. 5 is a plan showing an example of a propeller fan in Fig. 1.
Fig. 6 is a perspective view showing a sectional form of the propeller fan in Fig. 5 taken in a position of 295 mm in diameter.
Fig. 7 is a perspective view showing a sectional form of the propeller fan in Fig. 5 taken in a position of 130 mm in diameter.
Fig. 8 is a perspective view showing a sectional form of the propeller fan in Fig. 5 taken in a position of 95 mm in diameter.
Fig. 9 is a plan showing a propeller fan for comparison.
Fig. 10 is a graph showing a relationship between a rotation speed and an air flow rate of the propeller fan.
Fig. 11 is a graph showing a relationship between the air flow rate and power consumption of a drive motor.
Fig. 12 shows pressure-flow rate characteristics of the propeller fan in Fig. 5 and the propeller fan for the comparison in Fig. 9.
Fig. 13 illustrates a mechanism of the propeller fan.
Fig. 14 is another view for illustrating a mechanism of the propeller fan.
Fig. 15 is further another view for illustrating the mechanism of the propeller fan.
Fig. 16 is a plan showing a propeller fan according to a second example related to the invention.
Fig. 17 is a perspective view of the propeller fan in Fig. 16 viewed from the intake side.
Fig. 18 is a cross section showing the propeller fan taken along line XVIII - XVIII in Fig. 17.
Fig. 19 is a plan showing a central portion of the propeller fan viewed in a direction of an arrow XIX in Fig. 18.
Fig. 20 is a cross section showing a stacked state of the plurality of propeller fans in Fig. 18.
Fig. 21 is a cross section showing a first modification of the structure for stacking a plurality of propeller fans.
Fig. 22 is a plan showing the propeller fan viewed in a direction of an arrow XXII in Fig. 21.
Fig. 23 is a cross section showing the stacked state of the plurality of propeller fans in Fig. 21.
Fig. 24 is a cross section showing a second modification of the structure for stacking the plurality of propeller fans.
Fig. 25 is a plan showing the propeller fan viewed in a direction of an arrow XXV in Fig. 24.
Fig. 26 is a cross section showing the stacked state of the plurality of propeller fans in Fig. 24.
Fig. 27 is a side view showing a propeller fan according to a fourth example related to the invention.
Fig. 28 is a plan showing the propeller fan viewed in a direction (from the intake side) of an arrow XXVIII in Fig. 27.
Fig. 29 is a plan showing the propeller fan viewed in a direction (from the outlet side) of an arrow XXIX in Fig. 27.
Fig. 30 is a perspective view showing the propeller fan in Fig. 27 viewed from the intake side.
Fig. 31 is a side view showing a propeller fan of a fifth example related to the invention.
Fig. 32 is a plan showing the propeller fan viewed in a direction of an arrow XXXII in Fig. 31.
Fig. 33 is a plan showing a modification of the propeller fan in Figs. 31 and 32.
Fig. 34 is a plan showing a propeller fan according to a sixth example related to the invention.
Fig. 35 is a graph showing a relationship between a rotation speed and an air flow rate of the propeller fan.
Fig. 36 is a graph showing a relationship between the air flow rate of the propeller fan and a power consumption of a drive motor.
Fig. 37 illustrates, for comparison, the air flow rates exhibited corresponding to the same rotation speed.
Fig. 38 illustrates, for comparison, the power consumptions of the drive motors exhibited corresponding to the same air flow rate.
Fig. 39 is a graph illustrating, for comparison, the power consumption of the drive motor exhibited when X/D changes while Y/D is constant (= 0.068) and the air flow rate is constant.
Fig. 40 is a graph illustrating, for comparison, an air flow rate exhibited when Y/D changes while X/D is constant (= 0.33) and the rotation speed is constant.
Fig. 41 is a plan showing a modification of the propeller fan in Fig. 34.
Fig. 42 is a plan showing a propeller fan according to a first embodiment of the invention. Fig. 43 is a cross section showing molding dies used for producing the propeller fan in Fig. 1.
Fig. 44 is a plan showing an example of positions where gates are located in the molding die for producing a propeller fan with two blades.
Fig. 45 is a plan showing an example of the positions where the gates are located in the molding die for producing a propeller fan with three blades .
Fig. 46 shows an example for comparison of a propeller fan having a gate located in a position other than those shown in Fig. 44.
Fig. 47 shows an example for comparison of a propeller fan having gates located in positions other than those shown in Fig. 45.
Fig. 48 is a plan showing another example of the positions where the gates are located in the molding die for producing the two-blade propeller fan.
Fig. 49 is a plan showing another example of the positions where the gates are located in the molding die for producing the three-blade propeller fan.
Fig. 50 shows, as an example for comparison, a propeller fan provided with gates in positions other than those shown in Fig. 48.
Fig. 51 shows, as an example for comparison, a propeller fan provided with gates in positions other than those shown in Fig. 49.
Fig. 52 shows an outdoor unit of an air conditioner with the propeller fan in Fig. 1.

### DESCRIPTION OF THE REFERENCE SIGNS

10, 48, 49, 50, 52, 53, 56 and 57 propeller fan, 21, 21A, 21B and 21C blades, 21b front edge, 21c rear edge, 22 concave portion, 26, 36, 36M and 36N blade surface, 31 connection portion, 37 surface, 41 boss hub, 42 end surface, 43 flat surface portion, 44 flat surface, 45 and 46 protrusion, 58, 59 and 60 convex portion, 61 molding die, 66 gate, 75 outdoor unit, 101 center axis

### BEST MODES FOR CARRYING OUT THE INVENTION

Embodiments of the invention and examples related to the invention will now be described with reference to the drawings. In the following description, the same or corresponding members bear the same reference numbers.

### (First Example)

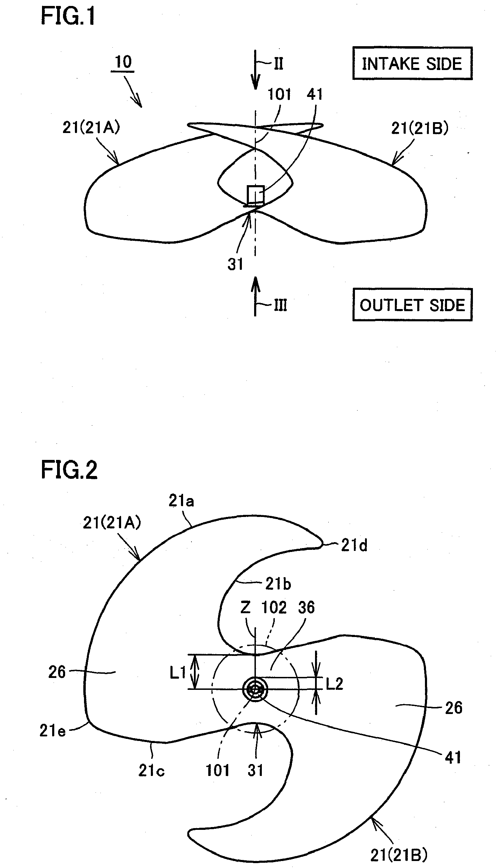

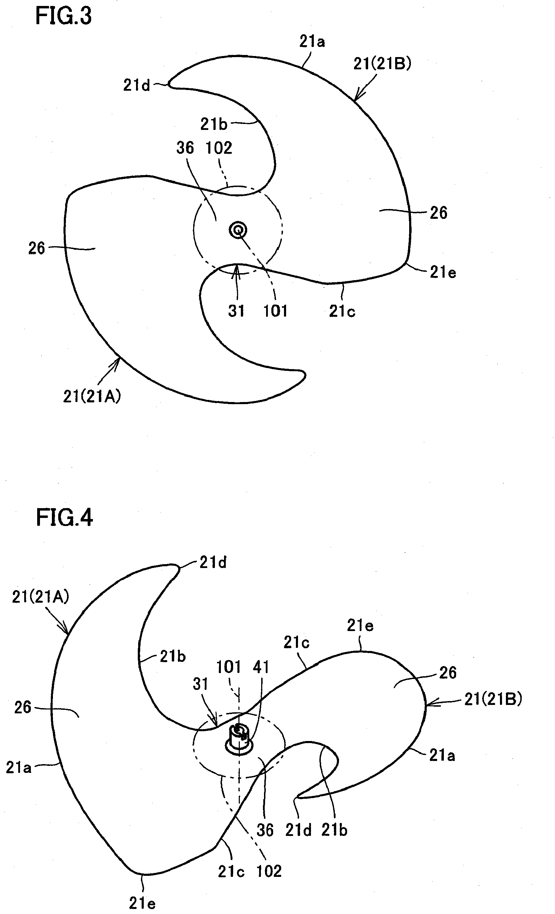

Fig. 1 is a side view showing a propeller fan according to a first example related to the invention. Fig. 2 is a plan showing the propeller fan viewed in a direction (from an intake side) of an arrow II in Fig. 1. Fig. 3 is a plan showing the propeller fan viewed in a direction (from an outlet side) of an arrow III in Fig. 1. Fig. 4 is a perspective view of the propeller fan in Fig. 1 viewed from the intake side.

Referring to Figs. 1 to 4, a basic structure of a propeller fan 10 according to the example is described below. Propeller fan 10 has a plurality of blades 21A and 21B that are circumferentially spaced from each other for performing air blowing according to rotation, and also has a connection portion 31 that has a blade surface 36 as a surface of a blade-surface-like form for performing the blowing, and is located between the plurality of blades 21A and 21B neighboring to each other for connecting base portions of blades 21A and 21B together.

Propeller fan 10 rotates around a center axis 101 that is an imaginary axis, and blows the air from an intake side to an outlet side in Fig. 1. In the figure, when propeller fan 10 is viewed in the direction of center axis 101 and imaginary circle 102 is drawn to separate blades 21A and 21B from each other in the circumferential direction around center axis 101, connection portion 31 is defined inside imaginary circle 102, and blades 21A and 21B are defined outside imaginary circle 102.

The basic structure of propeller fan 10 can be also described or expressed as follows. Propeller fan 10 has a form in which the plurality of blades 21A and 21B for the blowing are spaced from each other in the rotational direction and are coupled together, and the region of such coupling has a form that perform the blowing according to the rotation.

Then, a structure of propeller fan 10 according to the example will be described below. Propeller fan 10 is prepared by integral molding of synchronous resin such as glass-fiber-filled AS (Acrylonitrile-Styrene) or the like.

Propeller fan 10 is of a two-blade type, and has blades 21A and 21B, which may be collectively referred to as "blades 21" hereinafter.

Blades 21A and 21B are equally spaced from each other in the circumferential direction of the rotation axis of propeller fan 10, i.e., center axis 101. Blades 21A and 21B have the same forms, which can match each other when one of them rotates around center axis 101 toward the other.

Blade 21 has a front edge 21b located on a forward side in the rotational direction of propeller fan 10, a rear edge 21c located on the opposite side in the rotational direction, an outer edge 21a located on the radially outermost side with respect to center axis 101, a leading blade edge 21d smoothly connecting front edge 21b and outer edge 21a together, and a trailing blade edge 21e smoothly connecting rear edge 21c and outer edge 21a together. Leading blade edge 21d has a crescent- or scythe-like sharp form.

Blade 21 has a blade surface 26 that performs the blowing according to the rotation of propeller fan 10 (i.e., blowing the air from the intake side to the outlet side).

Blade surface 26 is formed on each of the sides facing to the inlet side and the outlet side, respectively. Blade surface 26 is formed in a region surrounded by front edge 21b, leading blade edge 21d, outer edge 21a, trailing blade edge 21e and rear edge 21c. Blade surface 26 is formed throughout the area of the region surrounded by front edge 21b, leading blade edge 21d, outer edge 21a, trailing blade edge 21e and rear edge 21c. Each of blade surfaces 26 of blades 21A and 21B is formed of a curved surface that inclines to move from the intake side toward the outlet side as the position moves in the circumferential direction from front edge 21b toward rear edge 21c.

Blades 21A and 21B are coupled together by connection portion 31 arranged round center axis 101.

Connection portion 31 has blade surfaces 36 on the sides facing to the intake side and the outlet side, respectively, and has a blade-like form. Blade surface 36 is formed continuously to each of blade surfaces 26 of blades 21A and 21B. Blade surfaces 26 of blades 21A and 21B is formed continuously to each other through blade surface 36. In this example, front edge 21b of blade 21A is opposed to rear edge 21c of blade 21B in the direction of a line passing through blades 21A and 21B, and front edge 21b of blade 21B and rear edge 21c of blade 21A are opposed to each other in the same direction. Therefore, the direction of inclination of the blade surface of blade 21A and the direction of inclination of the blade surface of blade 21B exhibit such a positional relationship that these directions are twisted with respect to each other with center axis 101 located therebetween. The inclination of the blade surface decreases as the position moves from blade surface 26 of each of blades 21A and 21B to blade surface 36 of connection portion 31, and blade surface 36 of blade 21A is smoothly connected to blade surface 36 of blade 21B on a line passing through center axis 101. Thus, blades 21A and 21B as well as connection portion 31 form blade surfaces 26 and blade surface 36, respectively, which extend continuously to each other in a tangential fashion.

In propeller fan 10 according to the example, the region coupling blades 21A and 21B together has a form that performs the blowing according to the rotation. The region coupling blades 21A and 21B together has a blade-surface-like form for blowing the air according to the rotation.

The base portions of front and rear edges 21b and 21c of respective blades 21A and 21B are connected together, and the base portions of front and rear edges 21b and 21c of respective blades 21B and 21A are connected together. Connection portion 31 has such a form that the position changes from the intake side toward the outlet side as the position moves from the base portion of front edge 21b of blade 21A toward the base portion of rear edge 21c of blade 21B, and such that the position moves from the intake side toward the outlet side as the position moves from the base portion of front edge 21b of blade 21B toward the base portion of rear edge 21c of blade 21A.

Connection portion 31 has such a form that the position changes from the portion continuing to blade surface 26 of blade 21 extends from the intake side, in the blowing direction, to the outlet side as the position moves from the base portion of front edge 21b of blade 21A toward the base portion of rear edge 21c of blade 21B, and the portion continuing to blade surface 26 of blade 21 extends from the intake side, in the blowing direction, toward the outlet side as the position moves from the base portion of front edge 21b of blade 21B toward the base portion of rear edge 21c of blade 21A. Connection portion 31 is configured to have a function of supplying the air flow from the intake side, in the blowing direction, of propeller fan 10 toward the outlet side.

Blades 21A and 21B as well as connection portion 31 have thin forms, respectively, and are integral with each other. Thus, propeller fan 10 according to the exmaple has the two blades, each of which has an integral form as a whole and extends radially outward from the center of center axis 101, and blades 21A and 21B are integrally formed with connection portion 31 therebetween. Propeller fan 10 has an integral form including blades 21A and 21B as well as the region coupling blades 21A and 21B together.

Propeller fan 10 has a boss hub 41 as a rotation shaft. Boss hub 41 connects propeller fan 10 to a drive source, i.e., an output shaft of an electric motor (not shown). Boss hub 41 has a circular cylindrical form, and is connected at a position overlapping center axis 101 to connection portion 31. Boss hub 41 extends in a direction of center axis 101 from blade surface 36 on the intake side. In propeller fan 10 according to the example, boss hub 41 that is a member for rotationally driving blades 21A and 21B is formed integrally with them and is located coaxially to the region coupling blades 21A and 21B together.

The form of boss hub 41 is not restricted to the cylindrical form, and can be appropriately changed according to the structure connected to the output shaft of the motor. Boss hub 41 may extend from blade surface 36 on the outlet side, and also may extend from blade surfaces 36 on the intake and outlet sides.

Connection portion 31 has a form extending radially outward from an outer peripheral surface of boss hub 41. In other words, when viewed in the direction of center axis 101 of propeller fan 10, connection portion 31 is formed such that a minimum distance L1 from center axis 101 to the outer edge of connection portion 31 on an imaginary line Z perpendicularly crossing center axis 101 is larger than a distance L2 from center axis 101 to the outer edge of boss hub 41 on imaginary line Z (see Fig. 2).

In an example of the preferable form of propeller fan 10, a section of propeller fan 10 taken along imaginary plane that contains center axis 101 and imaginary line Z in Fig. 2 has a substantially elliptical form, and a ratio of b/a is equal to 0.078 where "a" and "b" indicates a length in a circumferential direction (long axis) and a length in the axial direction (short axis), respectively.

When the resin molding is performed so that the ratio b/a between a and b falls within a range from 0.03 to 0.15, it is possible to provide the propeller fan that does not impair the molding property and the blowing performance, and does not have a problem in strength.

When the ratio b/a is smaller than 0.03, connection portion 31 has an excessively small resin thickness, resulting in a problem in strength. Further preferably, the ratio b/a is set to or above 0.046.

When the ratio b/a is larger than 0.150, connection portion 31 has an excessively large thickness so that a problem such as molding sink occurs in molding property, and the propeller fan has an excessively large mass, which impairs the blowing performance. Further preferably, the ratio b/a is set to or below 0.089.

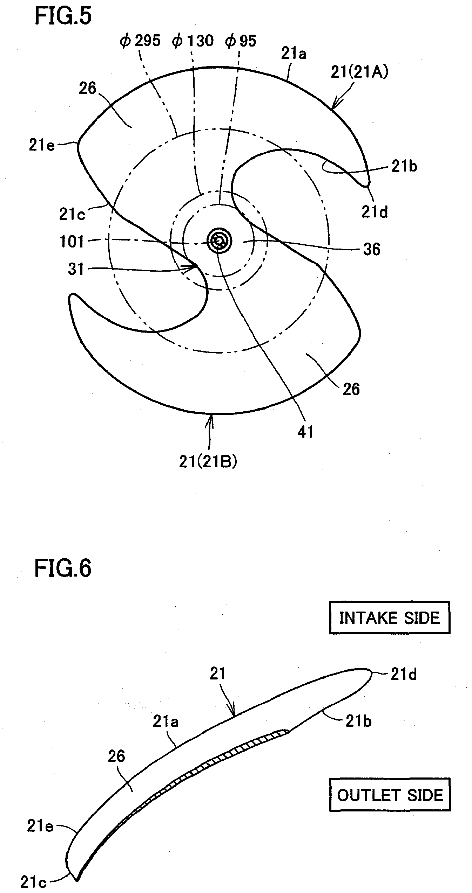

Fig. 5 is a plan showing an example of the propeller fan in Fig. 1. Referring to Fig. 5, propeller fan 10 has an outer diameter of 460 mm when viewed in the direction of center axis 101.

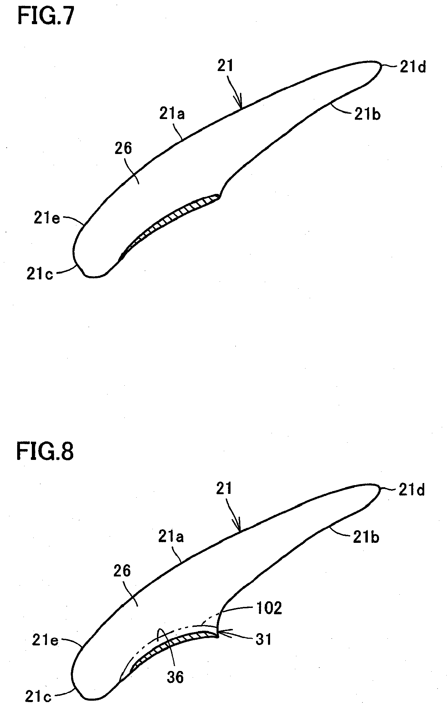

Fig. 6 is a perspective view showing a sectional form of the propeller fan in Fig. 5 taken in a position of 295 mm in diameter. Fig. 7 is a perspective view showing a sectional form of the propeller fan in Fig. 5 taken in a position of 130 mm in diameter. Fig. 8 is a perspective view showing a sectional form of the propeller fan in Fig. 5 taken in a position of 95 mm in diameter. Fig. 6 shows a section of blade 21, Fig. 7 shows a section of a boundary portion between blade 21 and connection portion 31, and Fig. 8 shows a section of connection portion 31.

Referring to Figs. 6 and 7, blade 21 has the blade-like form, and the section thereof in the circumferential direction extending between front and rear edges 21b and 21c has the thickness that decreases as the position moves from a position near the center of the blade toward front edge 21b or rear edge 21c, and particularly has the largest thickness in the position shifted from the center of the blade toward front edge 21b. Referring to Fig. 8, connection portion 31 has substantially the same blade-like form as blade 21 described above. Thus, propeller fan 10 according to the example has the section of the blade-like form in any section position between outer edge 21a and center axis 101.

The description has been given on propeller fan 10 that is integrally formed of the synthetic resin, but the material of the propeller fan is not restricted to the resin. For example, propeller fan 10 may be formed by effecting twist working on a single metal plate, or may be formed of an integral thin member having a curved surface. In these cases, boss hub 41 that is independently formed may be joined to the rotation center of propeller fan 10.

Description will now be given on operations and effects implemented or offered by propeller fan 10 according to the exmaple.

Propeller fan 10 according to the example is provided with connection portion 31 of a blade-like form connecting blades 21A and 21B together. Owing to this structure, even the rotation center portion that could not be practically and sufficiently used as the boss hub in the conventional structure can be effectively used as the blade having a blade-like sectional form and a large attack angle. This significantly enhances the blowing performance near the center where the peripheral speed is lower than that in the outer peripheral portion, and the blowing performance of the whole fan can be significantly improved.

By increasing the area of the blade for the blowing, it is possible to increase the air flow rate at the constant rotation speed. Further, a major portion of the large boss hub that is present in and near the rotation center in the conventional structure is replaced with connection portion 31 having the section of the blade-like form so that the mass of the propeller fan can be reduced. This reduces the load on the drive motor, and can reduce the electric power consumption at the constant air flow rate.

Further, the effects derived from the above operations and effects can be as follows:
(1) Since the air flow rate at the constant rotation speed can be reduced, the noise can be reduced. (In recent years, there is a tendency, e.g., in the air conditioner, that the air flow rate is increased for improving the energy-saving properties. This results in a problem that the noises increase to impair the degree of comfort in housing conditions. Conversely, propeller fan 10 according to the example can increase the air flow rate without increasing the noise.)
(2) Since the pressure-flow rate characteristics can be improved, the fan performance can be improved. (In recent years, there is a tendency, e.g., in the air conditioner, that the pressure loss increases as the performance of a heat exchanger is increased for improving the energy-saving properties. Since the air flow rate lowers as the pressure loss of the heat exchanger increases (i.e., the trade-off relationship), there is a problem that the effect by the increase in performance of the heat exchanger cannot be sufficiently achieved. Conversely, propeller fan 10 according to the example can improve the pressure-flow rate characteristics, and therefore can suppress the lowering of the air flow rate in the heat exchanger causing a large pressure loss. Consequently, it is possible to achieve sufficiently the effect of increasing the performance of the heat exchanger.)
(3) The fan efficiency can be improved and the power consumption can be reduced. (In recent years, there is a tendency, e.g., in the air conditioner, that the air flow rate is increased for improving the energy-saving properties. This results in a problem that the power consumption of the motor increases. Conversely, propeller fan 10 according to the example can suppress the increase in power consumption of the motor even when the air flow rate is increased. When the air flow rate is not increased, the power consumption of the motor can be reduced owing to the improvement of the efficiency.)
(4) Reduction in weight can reduce a material, and can further reduce the power consumption of the motor. (When the fan has a large weight, bearing loss of a motor shaft and the like increase, and additional power consumption is required. Conversely, propeller fan 10 according to the example can significantly reduce the weight of the fan, and thereby the bearing loss of the motor shaft and the like can be reduced so that the power consumption of the motor can be reduced.)

For the reasons described above, propeller fan 10 according to the example can implement the propeller fan that greatly contributes to the energy-saving properties and the resource-saving design in connection with the global environment conservation.

Then, description will be given on the practical examples that were implemented for confirming the foregoing operations and effects offered by propeller fan 10 according to the example.

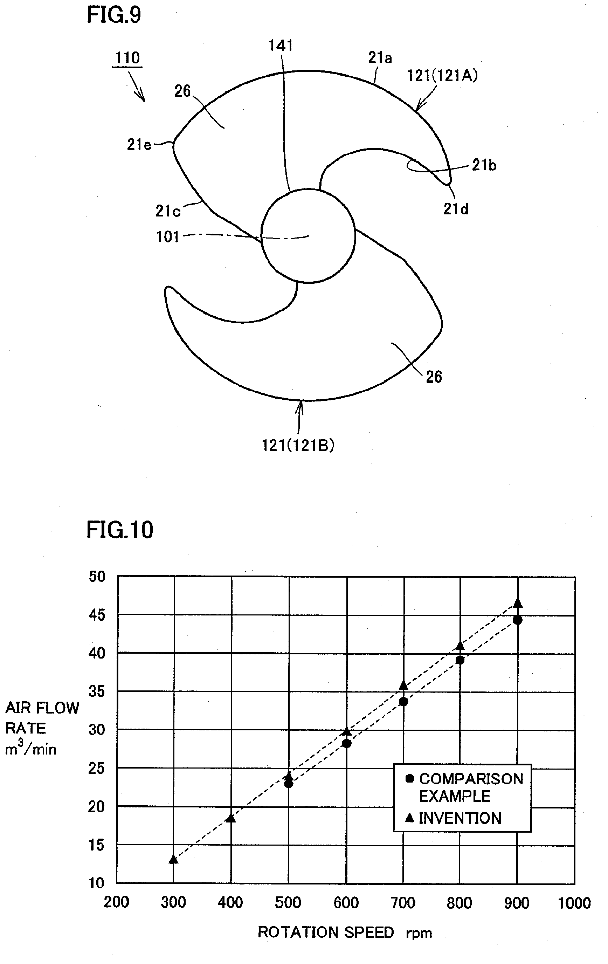

Fig. 9 is a plan showing a propeller fan for comparison. Referring to Fig. 9, a propeller fan 110 for comparison is provided at its rotation center with a boss hub 141 having an outer diameter of 130 mm, and is also provided with blades 121 (121A and 121B) extending radially outward from boss hub 141. The shape and size of blade 121 is substantially the same as those of blade 21 in Fig. 5.

Fig. 10 is a graph showing a relationship between the rotation speed and the air flow rate of the propeller fan according to the example. Referring to Fig. 10, the air flow rates were measured at various rotation speeds, using propeller fan 10 according to the example in Fig. 5 and propeller fan 110 for the comparison in Fig. 9. As can be seen from the graph of Fig. 10, the air flow rate of propeller fan 10 according to the example was larger than that of propeller fan 110 for the comparison in every rotation speed range. For example, when the rotation speed was 900 rpm, propeller fan 110 for the comparison exhibited the air flow rate of 44.49 m³/min, and propeller fan 10 according to the example exhibited the air flow rate of 46.79 m³/min (equal to 105.2% of that of the comparison example).

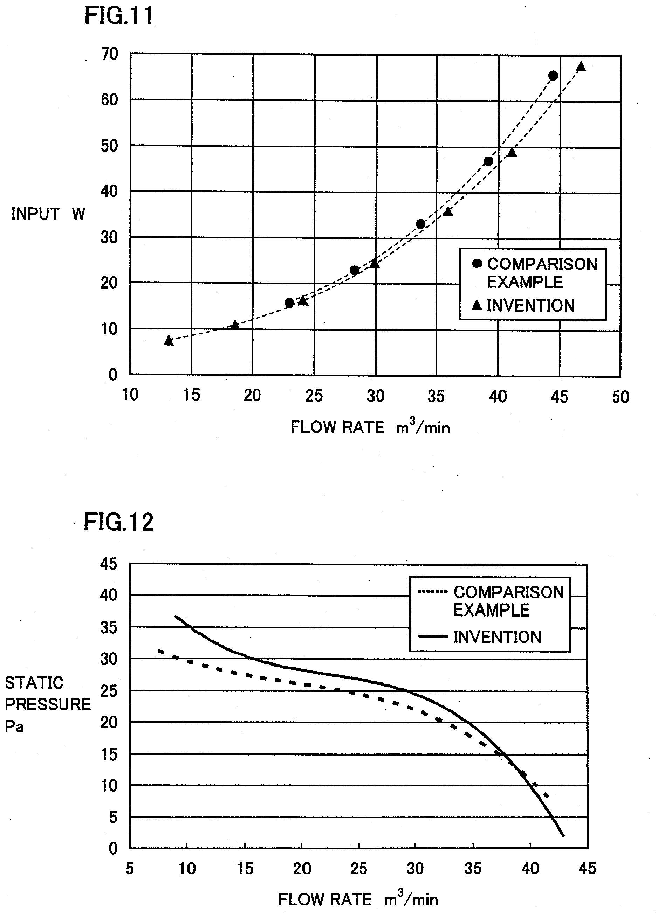

Fig. 11 is a graph showing a relationship between the air flow rate of the propeller fan and the power consumption of the drive motor (i.e., motor for driving) according to the example. Referring to Fig. 11, propeller fan 10 according to the example shown in Fig. 5 and propeller fan 110 for comparison in Fig. 9 were used, and the power consumption of each drive motor was measured at various air flow rates. As can be seen from the graph in the figure, the power consumption of propeller fan 10 according to the example was smaller than that of propeller fan 110 for the comparison in every air flow range. For example, when the air flow rate was 40 m³/min, the power consumption of propeller fan 110 for the comparison was 49.8 W, and propeller fan 10 according to the example was 46.2 W (equal to 107.8% of that of the comparison example).

It can be confirmed from the practical example described above that propeller fan 10 according to the example can increase the air flow rate at the constant rotation speed, and can reduce the power consumption of the drive motor at the constant air flow rate.

Then, the description will be given on a mechanism of improving the performance of propeller fan 10 according to the example.

Fig. 12 shows the pressure-flow rate characteristics of the propeller fan according to the example in Fig. 5 and the propeller fan for the comparison in Fig. 9. Referring to Fig. 12, the comparison was made between propeller fan 10 of 460 mm in outer diameter according to the example and propeller fan 110 of 460 mm in outer diameter for the comparison, and particularly was made in connection with the pressure-flow rate characteristics (P: static pressure - Q: flow rate) at the rotation speed of 700 rpm.

As can be seen from the graph in the figure, propeller fan 10 according to the example improved the P-Q characteristics at the constant rotation speed, as compared with propeller fan 110 for the comparison. Also, the power consumption of the drive motor at the constant air flow rate was reduced, and the motor efficiency was significantly improved.

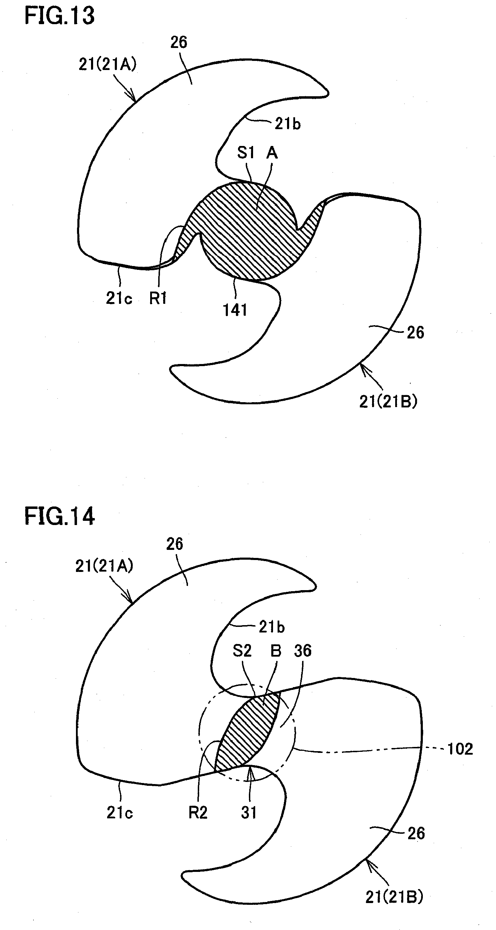

Figs. 13 to 15 illustrate the mechanism of the propeller fan according to the example. Referring to Figs. 13 to 15, the mechanism of the propeller fan according to the example will be specifically described below.

When blades 21 of the fan are driven to rotate, the wind passes over blade surfaces 26. In this operation, the wind first meets front edge 21b of blade 21, then flows along blade surface 26 and flows out beyond rear edge 21c of blade 21.

A phenomenon occurring near a center of the action of blades 21 will now be discussed. On the propeller fan for the comparison (see Fig. 13), the wind flows onto blade surface 26 through front edge 21b (S1 in Fig. 13) at the position where the base portion of blade 21 is in contact with boss hub 141. Thereafter, it turns and is affected by the centrifugal force so that a flow line expands slightly outward as indicated by R1 in Fig. 13 beyond a concentric circle. A hatched portion (area A) inside line R1 cannot perform the work of the blower producing the wind.

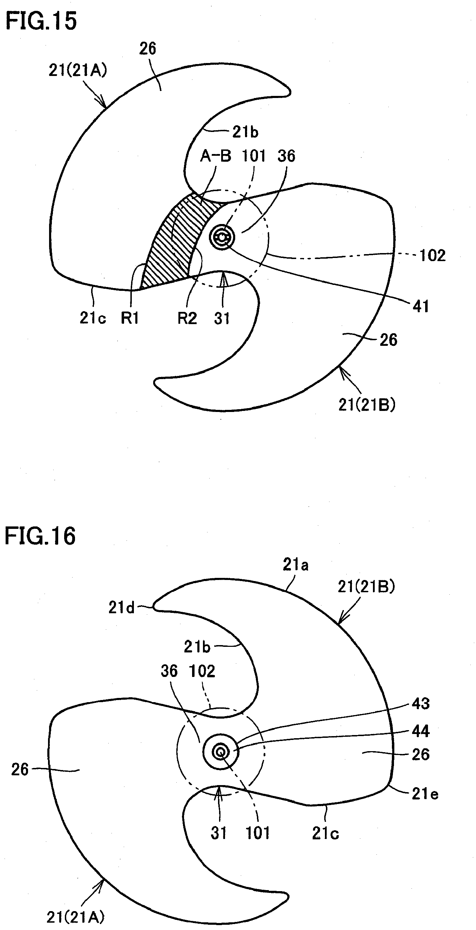

Conversely, according to the propeller fan of the example, boss hub 41 is extremely small, and even a portion thereof near the center operates as the blade, in contrast to the propeller fan for the comparison. Therefore, the wind flows onto blade surface 36 through front edge 21b (S2 in Fig. 14) of connection portion 31 forming a boundary with respect to the base portion of blade 21. Thereafter, the flow line slightly expands beyond the concentric circle as indicated by R2 in Fig. 14. Similarly to the propeller fan for the comparison, the hatched portion (area B) inside the line R2 cannot perform the work of the blower producing the wind. Fig. 15 shows an area difference (A - B) between the regions of them where the fans cannot perform the work of the blower producing the wind.

It is well known in aerodynamics that a lift is proportional to an area. The propeller fan according to the example can increase the lift by an amount corresponding to the above area difference (A - B). It is known that the wind is produced by a reaction force caused by the reaction of the lift, and the larger lift causes the larger reaction force, and increases the blowing performance.

### (Second Example)

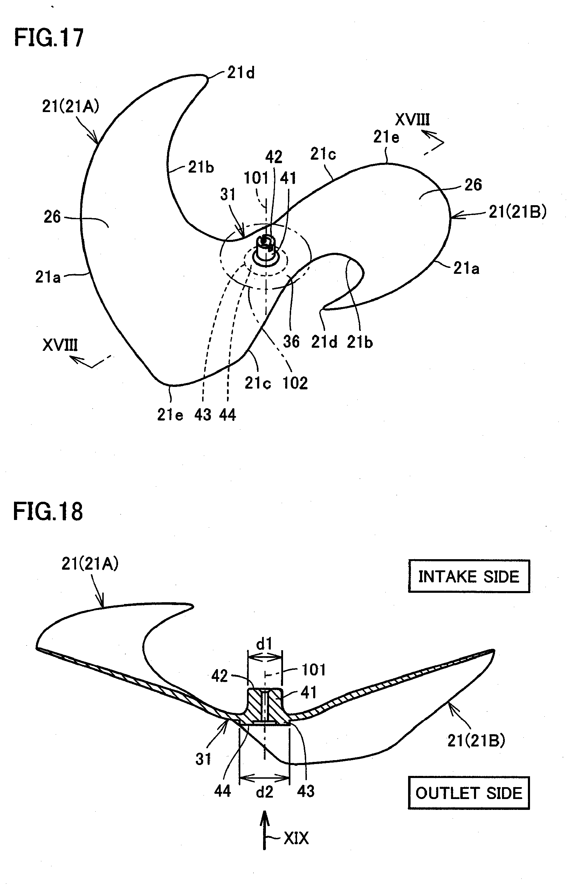

Fig. 16 is a plan showing the propeller fan according to a second example related to the invention. Fig. 16 corresponds to Fig. 3 relating to the first example. Fig. 17 is a perspective view of the propeller fan in Fig. 16 viewed from the intake side. Fig. 18 is a cross section showing the propeller fan taken along line XVIII - XVIII in Fig. 17.

Referring to Figs. 1, 2, 16, 17 and 18, description will be given on a basic structure of propeller fan 10 according to the example. Propeller fan 10 has the plurality of blades 21A and 21B that are circumferentially spaced from each other for performing the blowing according to the rotation, and connection portion 31 that has blade surface 36 as a blade-surface-like surface for performing the blowing according to the rotation and connects the base portions of blades 21A and 21B neighboring to each other. In other words, propeller fan 10 is formed by coupling the plurality of blades 21A and 21B, which perform the blowing, to each other and providing the coupled region that assumes the form for performing the blowing according to the rotation.

Propeller fan 10 further has boss hub 41 serving as the rotation shaft that is arranged coaxially to the rotation center of blades 21A and 21B, protrudes from the intake side of connection portion 31 and has an end surface 42 parallel to the plane perpendicular to the rotation axis of blades 21A and 21B. When propeller fan 10 is viewed in the direction of its rotation axis, minimum distance L1 from the rotation axis to the outer edge of connection portion 31 on imaginary line Z perpendicularly crossing the center axis is larger than distance L2 from the center axis to the outer edge of boss hub 41 on imaginary line Z. Propeller fan 10 further has a flat surface portion 43 parallel to end surface 42. When boss hub 41 is projected (i.e., image-projected) in the direction of the rotation axis of blades 21A and 21B, an outer form of flat surface portion 43 is larger than that of boss hub 41.

Propeller fan 10 rotates around center axis 101 that is an imaginary axis, and thereby performs the blowing from the intake side in Fig. 1 to the outlet side. In the figure, when propeller fan 10 is viewed in the direction of center axis 101 and imaginary circle 102 is drawn to separate blades 21A and 21B from each other in the circumferential direction around center axis 101, connection portion 31 is defined inside imaginary circle 102, and blades 21A and 21B are defined outside imaginary circle 102.

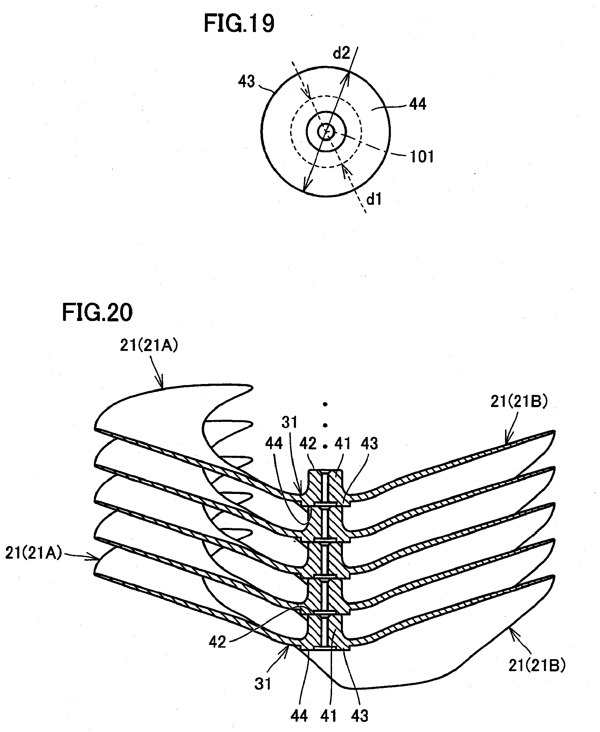

Then, description will be given on the structure employed for stacking the plurality of propeller fans 10 for storing or transporting. Fig. 19 is a plan showing a central portion of the propeller fan viewed in a direction of an arrow XIX in Fig. 18.

Referring to Figs. 18 and 19, boss hub 41 has end surface 42 on a portion extending in the direction of center axis 101 from connection portion 31 on the intake side. End surface 42 extends parallel to the plane perpendicular to the direction of center axis 101. In this example, when the intake side of propeller fan 10 is viewed in the direction of center axis 101, end surface 42 has a circular outer shape, and has an outer diameter d1 with respect to center axis 101.

Propeller fan 10 has flat surface portion 43 providing flat surface 44. Flat surface portion 43 is located on the side remote from the intake side where boss hub 41 is arranged, i.e., on connection portion 31 on the outlet side. Flat surface 44 is formed as the end surface of flat surface portion 43, and extends parallel to end surface 42 of boss hub 41. Flat surface 44 is formed in a position protruding from blade surface 36 of connection portion 31 in the direction of center axis 101. In this example, when the outlet side of propeller fan 10 is viewed in the direction of center axis 101, flat surface 44 has a circular outer form, and has an outer diameter d2 larger than outer diameter d1 with respect to the center defined by center axis 101. Flat surface 44 is formed coaxially to end surface 42.

The example has been described in connection with the case where end surface 42 and flat surface 44 have the circular outer forms, respectively. This is not restrictive, and these may have polygonal forms or elliptic forms, respectively.

Fig. 20 is a cross section showing a stacked state of the plurality of propeller fans in Fig. 18. Referring to Fig. 20, the plurality of propeller fans 10 are stacked in the height direction thereof (i.e., in the direction of center axis 101). In this case, the plurality of propeller fans 10 are stacked such that the inlet side and therefore the outlet side of each propeller fan 10 are directed in the vertically same directions as those of the others, respectively. The plurality of propeller fans are stacked such that flat surface 44 of upper propeller fan 10 is placed on end surface 42 of lower propeller fan 10.

Propeller fan 10 according to the second example related to the invention thus configured can achieve substantially the same effect as the first example.

Additionally, propeller fan 10 according to the example has boss hub 41 of reduced sizes owing to provision of the blade-like connection portion 31. Since flat surface portion 43 is configured such that flat surface 44 has a larger outer form than end surface 42 formed on boss hub 41 of the reduced sizes, the plurality of propeller fans 10 can be stacked stably.

When the propeller fan (i.e., propeller fan 110 for comparison in Fig. 9) has the large boss hub from which the plurality of blades extends radially outward, the vertically neighboring boss hubs of the propeller fans can be combined so that the plurality of propeller fans can be stacked relatively easily. However, when the portion provided with the boss hub of the propeller fan is replaced with blade-like connection portion 31 for improving the blowing capacity of the fan, blade surface 36 of connection portion 31 formed at the rotation center causes another problem that propeller fans 10 cannot be stacked without difficulty.

Conversely, according to the example, flat surface portion 43 is located on the outlet side opposite to the intake side on which boss hub 41 is located. Thereby, propeller fans 10 can be stacked through boss hub 41 and flat surface portion 43. Consequently, the plurality of propeller fans 10 can be stably stacked together by a simple manner for storing or transporting.

### (Third Example)

This example will be described below in connection with a modification of the structure for stacking the plurality of propeller fans for storing or transporting as described in the second example.

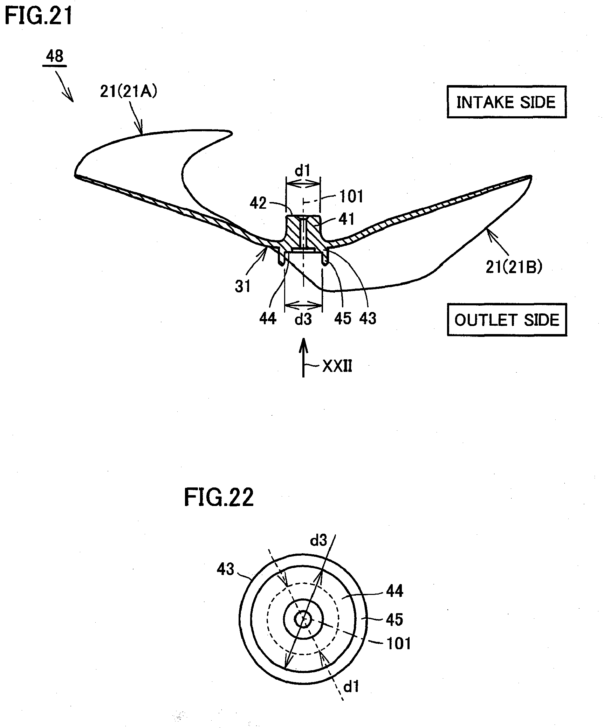

Fig. 21 is a cross section showing a first modification of the structure for stacking the plurality of propeller fans. Fig. 22 is a plan showing the propeller fan viewed in a direction of an arrow XXII in Fig. 21.

Referring to Figs. 21 and 22, a propeller fan 48 in this modification includes a protrusion 45 in addition to the structures in Fig. 18. Protrusion 45 is arranged on the same side as flat surface portion 43, i.e., on connection portion 31 on the outlet side. Protrusion 45 has an annular form coaxial to center axis 101, and protrudes in the direction of center axis 101 from flat surface 44. In this example, when the outlet side of propeller fan 48 is viewed in the direction of center axis 101, protrusion 45 has the annular form having a circular section, and an inner diameter d3 thereof with respect to a center defined by center axis 101 is larger than outer diameter d1 of boss hub 41.

The annular section of protrusion 45 may be appropriately modified according to the form of boss hub 41.

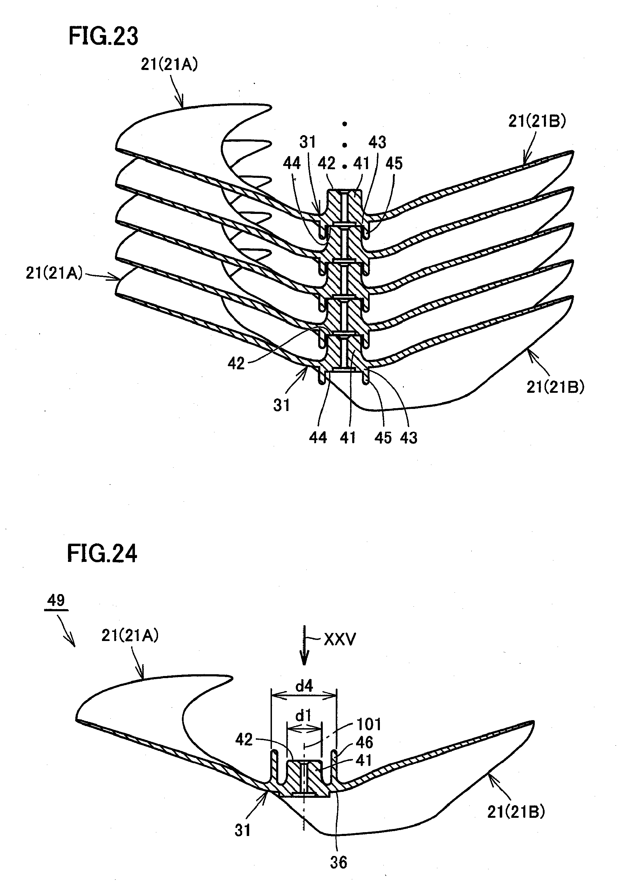

Fig. 23 is a cross section showing the stacked state of the plurality of propeller fans in Fig. 21. According to the modification, as shown in Fig. 23, annular protrusion 45 of upper propeller fan 48 is fitted around boss hub 41 of lower propeller fan 48 when the plurality of propeller fans 48 are stacked such that flat surface 44 of upper propeller fan 48 is placed on end surface 42 of lower propeller fan 48, as is done in the form shown in Fig. 20.

According to the structure, the fitting of boss hub 41 into annular protrusion 45 can prevent horizontal shifting of the positions of propeller fans 48 so that propeller fans 48 can be stacked more stably.

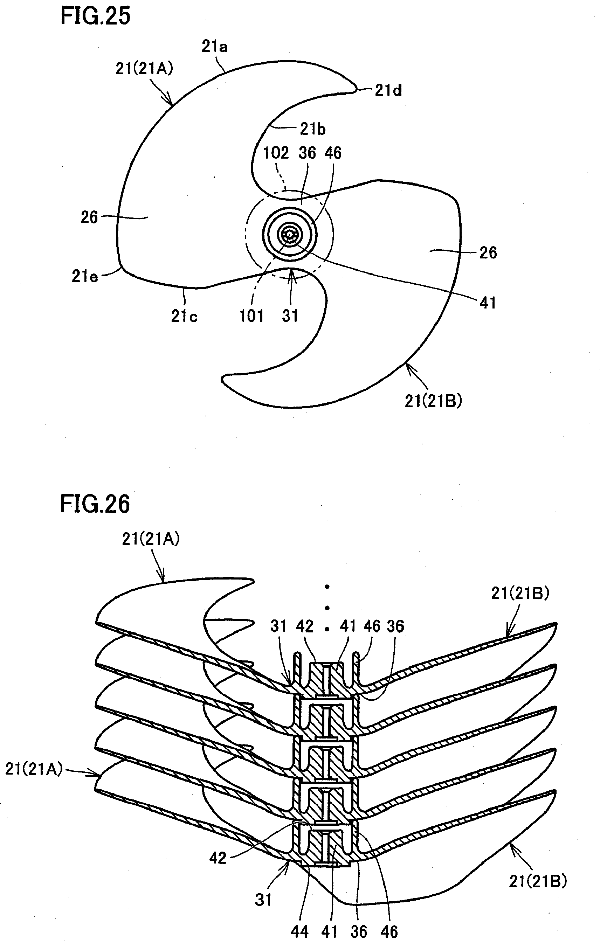

Fig. 24 is a cross section showing a second modification of the structure for stacking the plurality of propeller fans, and corresponds to Fig. 18 showing the first example. Fig. 25 is a plan showing the propeller fan viewed in a direction of an arrow XXV in Fig. 24.

Referring to Figs. 24 and 25, a propeller fan 49 according to this modification has a protrusion 46. Protrusion 46 protrudes from the same side as boss hub 41, i.e., from connection portion 31 on the intake side. Protrusion 46 has the annular form and is located on the outer periphery of boss hub 41. When the intake side of propeller fan 49 is viewed in the direction of center axis 101, protrusion 46 is coaxial to center axis 101 and has an annular form having an outer diameter d4 larger than outer diameter d1 of boss hub 41. Protrusion 46 protrudes in the direction of center axis 101 to a position higher than boss hub 41.

Fig. 26 is a cross section showing the stacked state of the plurality of propeller fans shown in Fig. 24. Referring to Fig. 26, the plurality of propeller fans 49 are stacked in the height direction thereof (i.e., in the direction of center axis 101). The plurality of propeller fans 49 are stacked such that the inlet side and therefore the outlet side of each propeller fan 49 are directed in the vertically same directions as those of the others, respectively. The plurality of propeller fans 49 are stacked such that blade surface 36 on the outlet side of upper propeller fan 49 is placed on annular protrusion 46 of lower propeller fan 49.

According to this structure, the plurality of propeller fans 49 can be stably stacked through annular protrusions 46. Also, a balance piece can be attached to annular protrusion 46 to eliminate an imbalance of propeller fan 49.

Propeller fans 48 and 49 according to the third example related to the invention having the above structure can achieve substantially the same effect as that of the second example.

### (Fourth Example)

A propeller fan according to a fourth example related to the invention basically and substantially has the same structure as propeller fan 10 according to the first example. Description of the same structures is not repeated.

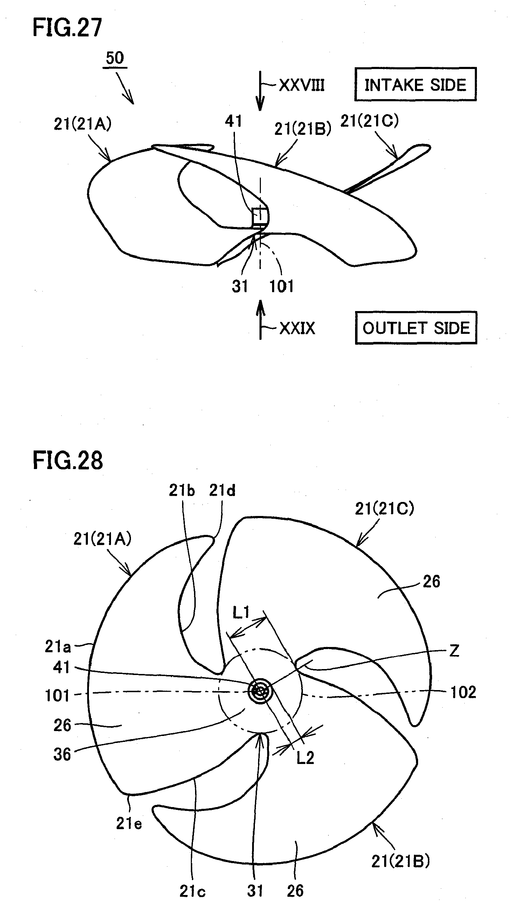

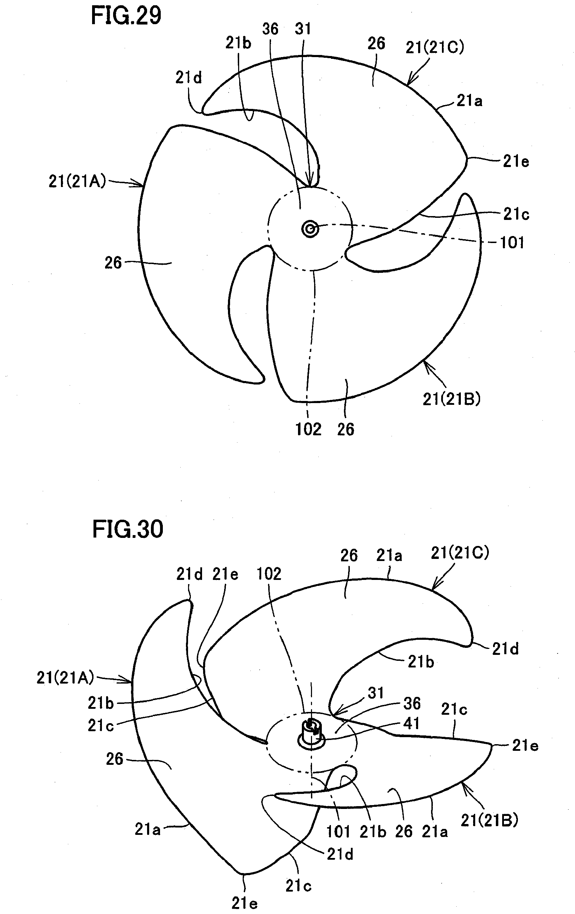

Fig. 27 is a side view showing the propeller fan according to the fourth example related to the invention. Fig. 28 is a plan showing the propeller fan viewed in a direction (from the intake side) of an arrow XXVIII in Fig. 27. Fig. 29 is a plan showing the propeller fan viewed in a direction (from the outlet side) of an arrow XXIX in Fig. 27. Fig. 30 is a perspective view showing the propeller fan in Fig. 27 viewed from the intake side.

Referring to Figs. 27 to 30, description will be given on the basic structure of a propeller fan 50 according to the example. Propeller fan 50 has the plurality of blades 21 (21A, 21B and 21C) that are circumferentially spaced from each other for performing the blowing according to the rotation, and also has connection portion 31 that has blade surface 36 serving as the blade-surface-like surface for performing the blowing according to the rotation, and connects the base portions of blades 21A, 21B and 21C of the plurality of neighboring blades 21 together.

Propeller fan 50 rotates around center axis 101 that is an imaginary axis, and thereby performs the blowing from the intake side to the outlet side in Fig. 16. In the figure, when propeller fan 50 is viewed in the direction of center axis 101 and such imaginary circle 102 is drawn that separates blades 21A, 21B and 21C from each other in the circumferential direction around center axis 101, connection portion 31 is defined inside imaginary circle 102 and blades 21A, 21B and 21C are defined outside imaginary circle 102. When a propeller fan has four or more blades 21, imaginary circle 102 is drawn similarly to propeller fan 50.

Propeller fan 50 is a three-blade fan having blades 21A, 21B and 21C. Blades 21A, 21B and 21C are equally spaced from each other in the circumferential direction around center axis 101. Blades 21A, 21B and 21C have the same forms.

Blades 21A, 21B and 21C are connected together by connection portion 31 arranged around center axis 101. In propeller fan 50 according to the example, the three blades that are formed of a single member and extend radially outward from center axis 101 are integrally formed of blades 21A, 21B and 21C as well as connection portion 31.

Propeller fan 50 has boss hub 41 as the center shaft. Connection portion 31 extends radially outward from the outer peripheral surface of boss hub 41. In other words, when propeller fan 50 is viewed in the direction of center axis 101, connection portion 31 is formed such that minimum length L1 of connection portion 31 measured from center axis 101 along imaginary line Z passing through center axis 101 is longer than length L2 of boss hub 41 measured from center axis 101 along imaginary line Z (see Fig. 28).

Propeller fan 50 according to the fourth example related to the invention having the above structure can achieve substantially the same effect as the first example.

The propeller fan may have four or more blades.

### (Fifth Example)

A propeller fan according to a fifth example related to of the invention basically and substantially has the same structure as propeller fan 10 according to the first example. Description of the same structures is not repeated.

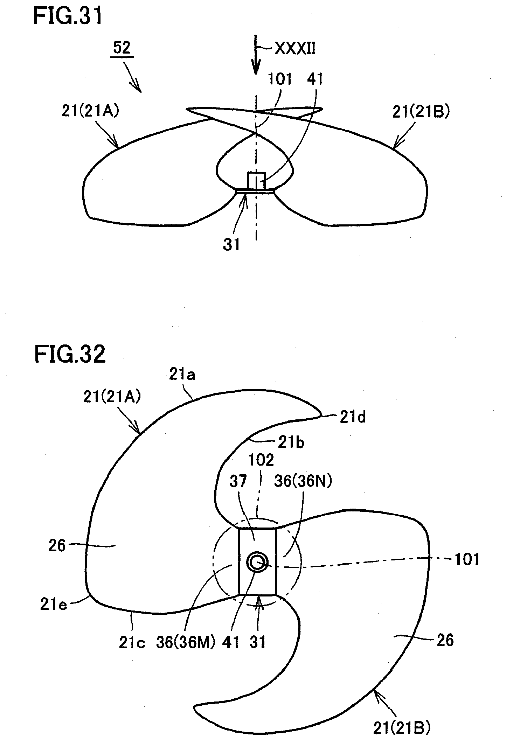

Fig. 31 is a side view showing the propeller fan of the fifth example related to the invention. Fig. 32 is a plan showing the propeller fan viewed in a direction of an arrow XXXII in Fig. 31.

Referring to Figs. 31 and 32, blade surface 36 of connection portion 31 in a propeller fan 52 according to the example is formed of a blade surface 36M that is a first portion continuously extending from blade surface 26 of blade 21A and a blade surface 36N that is a second portion continuously extending from blade surface 26 of blade 21B.

Connection portion 31 further has a flat surface 37 that is a surface of a not-blade-surface form. Flat surface 37 has a form that does not contribute to the blowing by propeller fan 52, and is flat in this example. Flat surface 37 is formed between blade surfaces 36M and 36N. Flat surface 37 is arranged coaxially to center axis 101, and extends radially outward from boss hub 41. In a direction of a line connecting blade surfaces 36M and 36N, flat surface 37 has a larger width than boss hub 41.

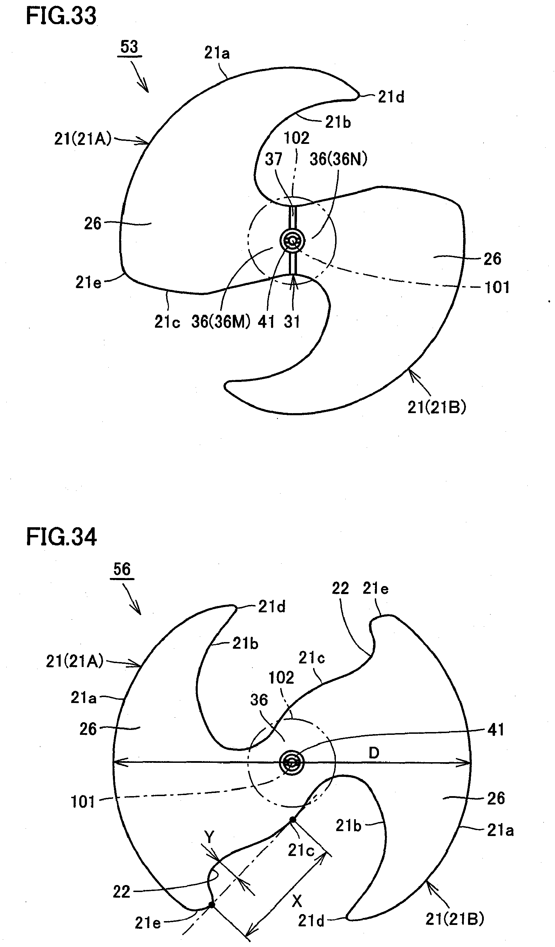

Fig. 33 is a plan showing a modification of the propeller fan in Figs. 31 and 32. Fig. 33 corresponds to Fig. 32. Referring to Fig. 33, a propeller fan 53 according to this modification has flat surface 37 of which width in the direction of the line connecting between blade surfaces 36M and 36N is smaller than that of boss hub 41.

In the case where connection portion 31 has flat surface 37, connection portion 31 may have blade surface 36 contributing to the blowing, whereby the blowing performance can likewise be improved. As is done in the modification shown in Fig. 33, the width of flat surface 37 can be minimized as far as possible so that the areas of blade surfaces 36M and 36N can be increased, and the blowing performance can be effectively improved.

Propeller fans 52 and 53 according to the fifth example related to the invention having the above structure can achieve substantially the same effect as the first example.

### (Sixth Example)

A propeller fan of a sixth example related to the invention basically and substantially has the same structure as propeller fan 10 according to the first example. Description of the same structures is not repeated.

Fig. 34 is a plan showing a propeller fan according to the sixth example related to of the invention. Referring to Fig. 34, a propeller fan 56 according to the example has concave portions 22 formed at rear edges 21c of blades 21A and 21B, respectively. Each concave portion 22 is hollowed from rear edge 21c of blade 21 toward front edge 21b, i.e., in the rotational direction of the blades 21. Concave portion 22 is formed to have trailing blade edge 21e of a crescent- or scythe-like form.

In this example, X indicates a length of the line extending between the opposite ends of concave portion 22 and, when the opposite ends are not clear, X indicates a length of a common tangential line with respect to the opposite ends. Length X is equal to or larger than 0.33 times outer diameter D of the blades (0.33 ≤ X/D), and a length Y from the deepest position of the concave portion to the above line extending between the opposite ends of the concave portion, or to the above tangential line is equal to or smaller than 0.068 times outer diameter D of the blades (Y/D ≤ 0.068).

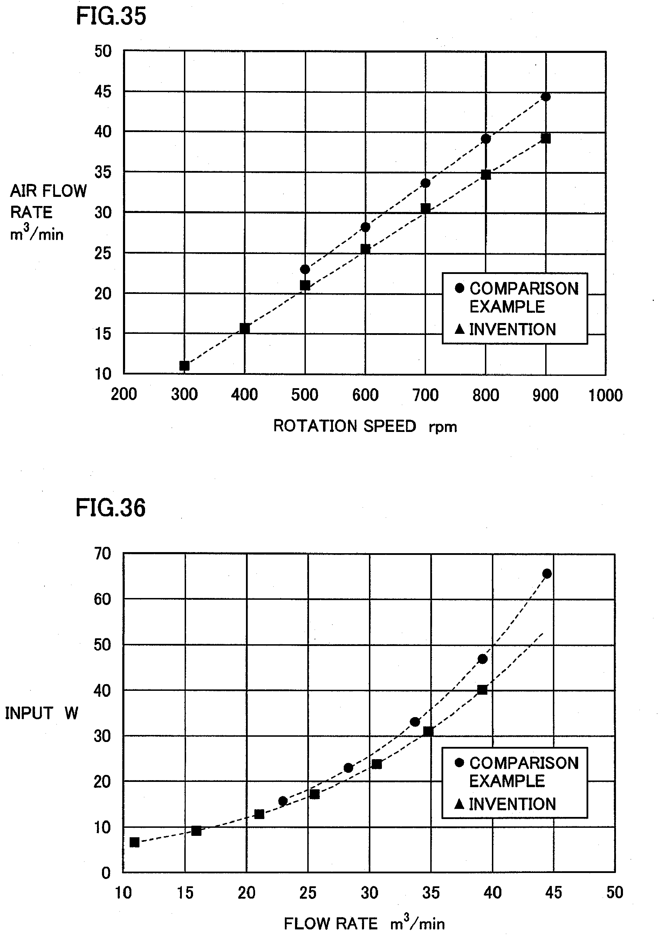

Fig. 35 is a graph indicating a relationship between the rotation speed of the propeller fan and the air flow rate in the sixth example related to the invention. Referring to Fig. 35, propeller fan 56 (outer diameter D = 460 mm, X/D = 0.37 and Y/D = 0.068) according to the example shown in Fig. 34 and propeller fan 110 for comparison in Fig. 9 were used to measure the air flow rates at various rotation speeds.

Fig. 36 is a graph showing a relationship between the air flow rate of the propeller fan and the power consumption of the drive motor according to the sixth example related to the invention. Referring to Fig. 36, propeller fan 56 (outer diameter D = 460 mm, X/D = 0.37 and Y/D = 0.068) according to the example shown in Fig. 34 and propeller fan 110 for comparison in Fig. 9 were used to measure the power consumption of the drive motor at various rotation speeds.

Referring to Figs. 35 and 36, the provision of concave portions 22 reduces the area of the blades to reduce efficiently a drag or resistance. Since the area of blades decreases, the air flow rate at a constant rotation speed decreases, but the drag efficiently decreases so that the power consumption can be reduced when the air flow rate is constant.

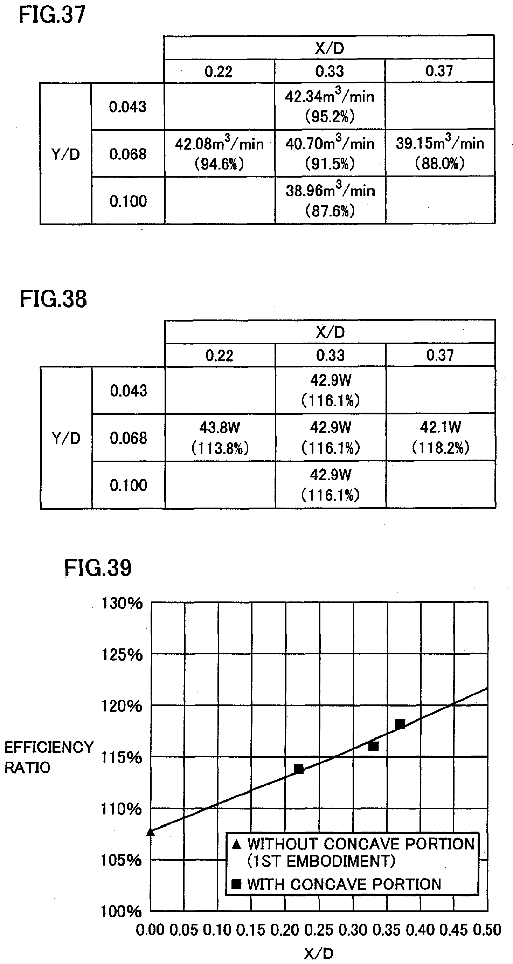

Fig. 37 illustrates, for comparison, the air flow rates exhibited corresponding to the same rotation speed. Fig. 37 shows values of the air flow rates attained when the propeller fans (outer diameter D = 460 mm) having different values of X/D and Y/D are used and the rotation speed is 900 rpm. A value under each flow rate indicates a ratio of the air flow rate with respect to the air flow rate (44.49 m³/min) of propeller fan 110 for comparison in Fig. 9.

Fig. 38 illustrates, for comparison, the power consumptions of the drive motors exhibited corresponding to the same air flow rate. Fig. 38 shows values of the power consumptions of the drive motor attained when the propeller fans (outer diameter D = 460 mm) having different values of X/D and Y/D are used and the air flow rate is 40 m³/min. A value under each power consumption indicates a ratio of the power consumption with respect to the power consumption (49.8 W) exhibited by propeller fan 110 for the comparison in Fig. 9.

Referring to Figs. 37 and 38, as Y/D changes while X/D is constant, the air flow rate at the constant rotation speed increases in accordance with decreasing of Y/D, and the power consumption at the constant rotation speed is substantially constant. By employing concave portion 22 satisfying the relationship of (Y/D ≤ 0.068), it is possible to reduce more effectively the decreasing ratio of the air flow rate with respect to the air flow rate of propeller fan 110 for comparison shown in Fig. 9.

As X/D changes while Y/D is substantially constant, the power consumption at the constant air flow rate decreases according to increase in X/D. By employing concave portion 22 satisfying the relationship of (0.33 ≤ X/D), it is possible to increase more effectively the relative efficiency with respect to the power consumption of propeller fan 110 for comparison shown in Fig. 9.

Fig. 39 is a graph illustrating, for comparison, the power consumption of the drive motor exhibited when X/D changes, Y/D is constant (= 0.068) and the air flow rate is constant. The ordinate in the figure gives a relative efficiency that is a ratio of the power consumption attained by propeller fan 56 in Fig. 34 with respect to that of propeller fan 110 for comparison in Fig. 9 when the air flow rate is 40 m³/min.

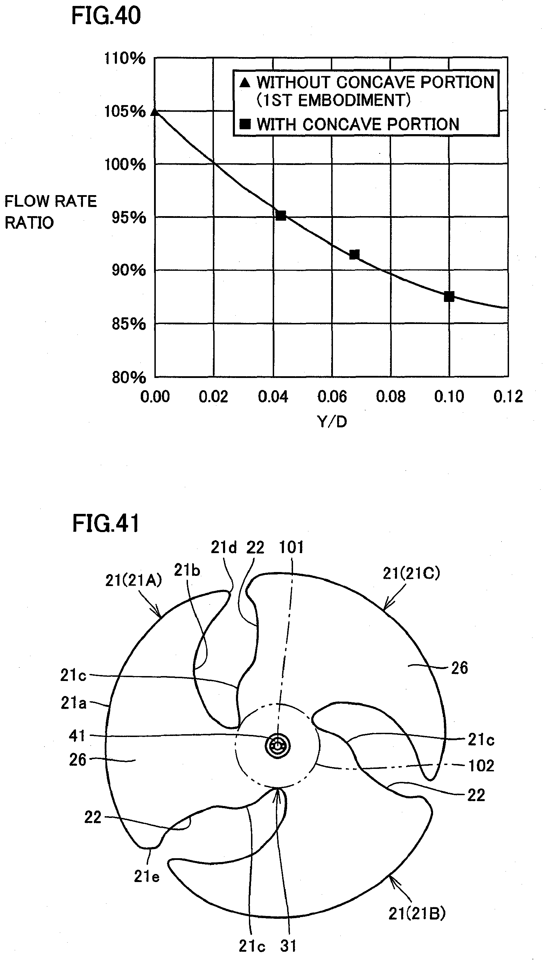

Fig. 40 is a graph illustrating, for comparison, the air flow rate exhibited when Y/D changes, X/D is constant (= 0.33) and the rotation speed is constant. The ordinate in the figure gives a relative ratio of the air flow rate that is attained by propeller fan 56 in Fig. 34 with respect to that of propeller fan 110 for comparison in Fig. 9 when the rotation speed is 900 rpm.

In propeller fan 56 shown in Fig. 34, since concave portion 22 is formed at rear edge 21c of blade 21, the value of X/D does not exceed 0.5. Referring to Fig. 39, concave portion 22 is more preferably formed to satisfy the relationship of (0.37 ≤ X/D < 0.5). The case where the value of Y/D is zero corresponds to propeller fan 10 of the first example. Referring to Fig. 40, concave portion 22 is more preferably formed to satisfy the relationship of (0 < Y/D ≤ 0.043).

The mechanism of the operations and effects achieved by concave portion 22 will be described below.

When a resistant object causing a large pressure loss such as a heat exchanger is present in an air flow path, the propeller fan is likely to cause such a phenomenon that a flow from a central portion of the fan, i.e., a portion of a low peripheral speed separates from the blade surface.

When the pressure loss is extremely large and may exceed the capacity of the fan, the separation occurs throughout the blade surfaces of the fan. When the pressure loss is within the capacity of the fan, the separation occurs on a part (a region near the center) of the blade surfaces of the fan.

When the complete separation occurs in the hatched portion in Fig. 15 (i.e., the region where the propeller fan according to the example is superior to the propeller fan for the comparison), the performance of the propeller fan according to the example lowers similarly to the propeller fan for the comparison. When there is a method of effectively suppressing this separation, the invention can exhibit its effect to the maximum extent.

Usually, the pressure loss is present in the air flow path, and the portion near the center of the blades is in such a situation that the separation is likely to occur. It can be assumed that the separation partially occurs in the hatched region in Fig. 15 of the propeller fan according to the example. The following structure is employed for completely preventing the separation in the hatched portion and effectively deriving the effect.

Thus, a vortex (blade tip vortex) occurring on leading blade edge 21d is guided to this hatched portion to refill it with kinetic energy. By forming concave portion 22 at rear edge 21c, the tip vortex can be fixed in this position so that the region of the hatched portion in Fig. 15 can always be refilled with the kinetic energy. Consequently, the separation in the region of the hatched portion in Fig. 15 is suppressed, and the effect can be efficiently derived.

Fig. 41 is a plan showing a modification of the propeller fan in Fig. 34. In the example shown in Fig. 41, three blades 21A, 21B and 21C are provided at their rear edges 21c with concave portions 22, respectively. Concave portion 22 has substantially the same form as concave portion 22 formed in propeller fan 56 having the two blades. When concave portions 22 are formed in the propeller fan having the three blades, it is possible to reduce the power consumption at the constant air flow rate, while reducing the area of the blades to reduce efficiently the drag.

Propeller fan 56 thus structured according to the sixth example related to the invention can achieve substantially the same effect as that of the first example.

### (First Embodiment)

The propeller fan according to a first embodiment of the invention basically and substantially has the same structure as propeller fan 10 according to the first example. Description of the same structures is not repeated.

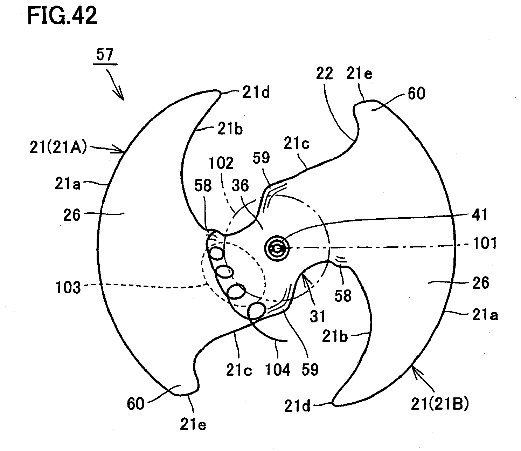

Fig. 42 is a plan showing the propeller fan according to the first embodiment of the invention. Referring to Fig. 42, a propeller fan 57 according to the embodiment has convex portions 58, i.e., first convex portions formed at front edges 21b of blades 21A and 21B, respectively. Convex portion 58 has a round form protruding toward the suction surface side (intake side) of blade 21. When viewed from the suction surface side, convex portion 58 has a curved surface rising from the surface of blade surface 26. Convex portion 58 is formed near the periphery of connection portion 31.

According to the structure described above, convex portions 58 form a vortex 104 according to the rotation of blades 21, and vortex 104 thus formed moves on blade surfaces 26 and 36. This vortex 104 prevents the separation or peeling of the air flow that occurs in a region 103 on blade surfaces 26 and 36, or in the region of the hatched portion in Fig. 15. Consequently, the performance and efficiency of the fan are improved, and the noises due to the separation can be reduced. The effect of suppressing the separation on blade surfaces 26 and 36 improves the pressure-flow rate characteristics so that the air blowing can be performed corresponding to the high pressure loss.

In this embodiment, a convex portion 59 expanding oppositely to the rotational direction of blades 21 is formed as a second convex portion in a coupling portion between connection portion 31 and each of rear edges 21c of respective blades 21A and 21B. Convex portion 59 formed at rear edge 21c of blade 21A protrudes toward front edge 21b of blade 21B, and convex portion 59 formed at rear edge 21c of blade 21B protrudes toward front edge 21b of blade 21A.

In this embodiment, a convex portion 60 expanding oppositely to the rotational direction of blades 21 is formed as a third convex portion in a coupling portion between the outer peripheral portion (outer edge 21a) of each blade 21 and rear edge 21c of each of blades 21A and 21B. Convex portion 60 formed at trailing blade edge 21e of blade 21A protrudes toward leading blade edge 21d of blade 21B, and convex portion 60 formed at trailing blade edge 21e of blade 21B protrudes toward leading blade edge 21d of blade 21A.

The above structure increases a chord length of the portion provided with convex portions 59 and 60, and can blow the air flow by a larger force. In general, the blowing capacity is small in a position where a radius of rotation is short. However, the effect of extending the chord by provision of convex portion 59 can achieve a larger blowing capacity in spite of the fact that the radius of rotation is small. The fan has a large blowing capacity in a position where the radius of rotation is large. The chord of the region where the largest blowing capacity is obtained is extended so that the air flow rate of the fan at the constant rotation speed can be increased, and the larger blowing capacity can be obtained.

The embodiment has been described in connection with propeller fan 57 provided with convex portions 58 to 60. However, according to the invention, convex portion 58 may be formed alone or in an appropriate combination with convex portions 59 and/or 60.

Propeller fan 57 thus structured according to the first embodiment of the invention can achieve substantially the same effect as the first example.

The structures of the various propeller fans have been described as the first to sixth examples and the first embodiment. However, these are not restrictive, and the structures of the propeller fans described in connection with the first to sixth examples and the first embodiment can be appropriately combined to configure a new propeller fan.

### (Seventh Example)

This example will now be described in connection with a structure of molding dies for molding propeller fan 10 according to the first example from resin.

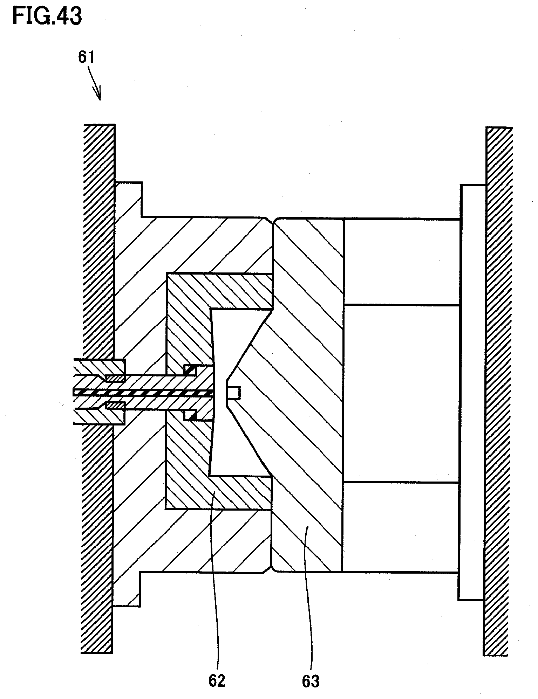

Fig. 43 is a cross section showing the molding dies used for producing the propeller fan in Fig. 1. Referring to Fig. 43, molding dies 61 have a stationary die 62 and a movable die 63. Stationary and movable dies 62 and 63 define a cavity having substantially the same shapes as propeller fan 10 for injecting flowable resin thereinto.

Molding die 61 may be provided with a heater (not shown) for increasing the flowability of the resin injected into the cavity. Such arrangement of the heater is particularly effective when synthetic resin having an increased strength such as glass-filled AS resin is used.

Molding die 61 shown in Fig. 43 is employed on the assumption that stationary die 62 forms a pressure surface of propeller fan 10, and movable die 63 forms a suction surface. However, stationary die 62 may form the suction surface of propeller fan 10, and movable die 63 may form the pressure surface.

The propeller fan is made of metal, and is integrally formed by draw forming of press working. A thick metal plate cannot be used for such drawing without difficulty, and increases a mass or weight so that a thin metal plate is generally used. In this case, a large propeller fan cannot have a sufficient strength (rigidity) without difficulty. Also, a part that is formed of a metal plate thicker than the blade portion and is called "spider" may be used for fixing the blade portion to the rotation axis. However, this results in a problem that the mass is large, a fan balance is impaired. In general, the metal plate used for it is thin and has a constant thickness, which results in a problem that the blade portion cannot have a blade-like sectional form.

Conversely, the above problems can be collectively overcome by using the resin for forming propeller fan 10.

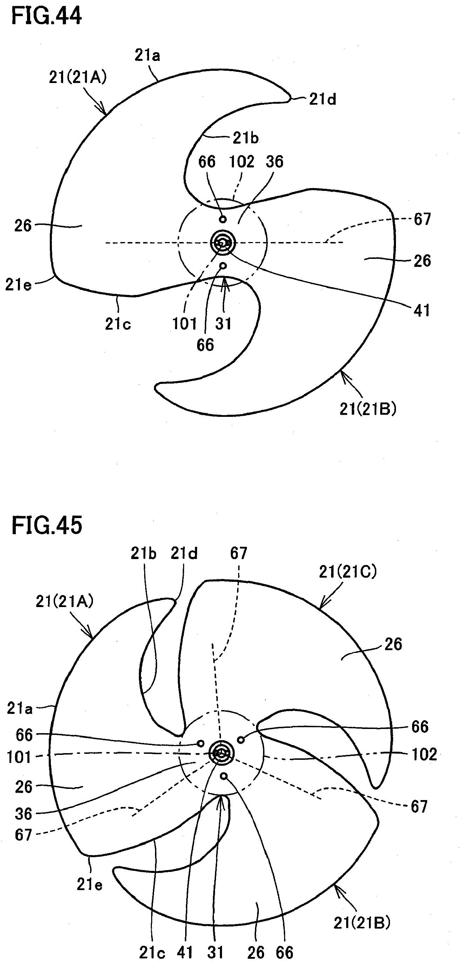

Fig. 44 is a plan showing an example of positions where gates are located in the molding die for producing a propeller fan with two blades of the example. Fig. 45 is a plan showing an example of the positions where the gates are located in the molding die for producing a propeller fan with three blades according to the example.

Referring to Figs. 44 and 45, molding dies 61 have gates 66 for supplying or injecting the resin into the cavity defined by stationary and movable dies 62 and 63 in Fig. 43. Preferably, gates 66 are formed in connection portion 31 and are located in positions corresponding to boundaries each defined between front and rear edge 21 and 21c of neighboring blades 21. In the case of the two-blade fan, these are formed in the boundaries between front edge 21b of blade 21A and rear edge 21c of blade 21B, and between front edge 21b of blade 21B and rear edge 21c of blade 21A, respectively. In the case of the three-blade fan, these are formed in the boundaries between front edge 21b of blade 21A and rear edge 21c of blade 21C, between front edge 21b of blade 21C and rear edge 21c of blade 21B, and between front edge 21b of blade 21B and rear edge 21c of blade 21A, respectively.

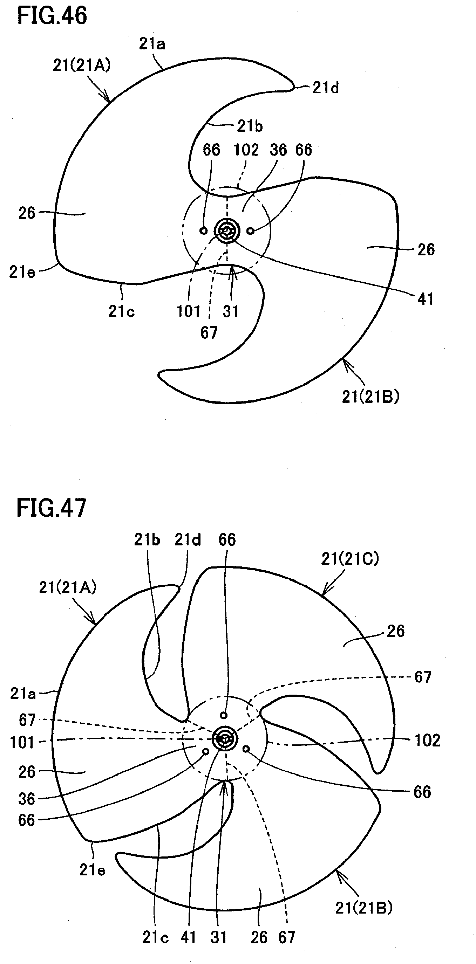

Figs. 46 and 47 show comparison examples of the propeller fans that have the gates in positions other than those shown in Figs. 44 and 45, respectively.

Referring to Figs. 46 and 47, when gate 66 is located in the position shown in Fig. 46 or 47 other than the foregoing positions, a weld line 67 (where the flows of flowable resin joined together in the dies so that a crack is liable to occur due to a low strength) may occur in the boundary between front edge 21b of each blade 21 and rear edge 21c of the neighboring blade 21. In the propeller fan according to the example, stress concentration occurs in the boundary between front edge 21b of each blade 21 and rear edge 21c of neighboring rear edge 21c so that a crack is liable to occur along weld line 67, and the breaking strength of the fan is remarkably low.

Referring to Figs. 44 and 45, however, gates 66 are formed in connection portion 31 and particularly in the positions that correspond to the respective boundaries each defined between front and rear edges 21b and 21c of neighboring blades, so that weld line 67 can be produced in the position that does not significantly lower the breaking strength of the fan as shown in the figures. Thus, the lowering of the breaking strength of the fan can be prevented.

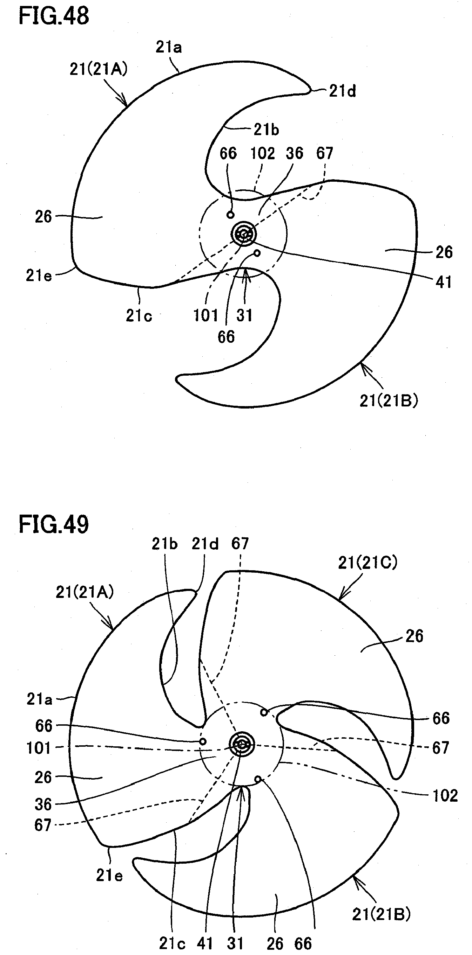

Fig. 48 is a plan showing another example of the positions where the gates are located in the molding die for producing the two-blade propeller fan according to the example. Fig. 49 is a plan showing another example of the positions where the gates are located in the molding die for producing the three-blade propeller fan according to the example.

Referring to Figs. 48 and 49, gates 66 are preferably located in connection portion 31 continuing to the base portions of blades 21, and particularly in the positions corresponding to the vicinities of the front edges 21b, i.e., in the positions that are circumferentially closer to front edges 21b of blades 21 than rear edges 21c of the same blades, respectively.

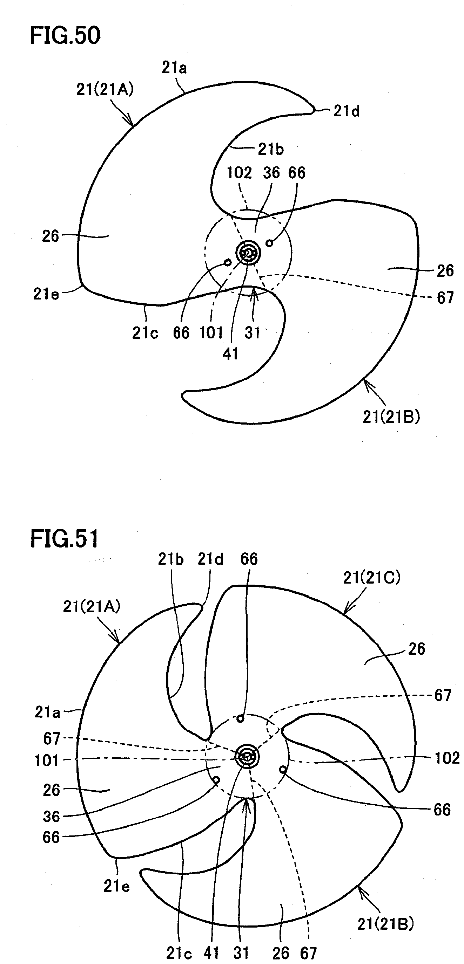

Figs. 50 and 51 show, as examples for comparison, propeller fans provided with gates in positions other than those shown in Figs. 48 and 49.

Referring to Figs. 50 and 51, when gates 66 are located, e.g., in the illustrated positions shifted from the foregoing positions, weld line 67 may occur in the positions on connection portion 31 continuing to the base portion of blades 21, and particularly in the positions near front edges 21b. In the propeller fan according to the example, since the stress concentration occurs in the positions on connection portion 31 continuing to the base portions of blades 21, and particularly in the positions near front edge 21b, the crack is liable to occur along weld line 67, and the breaking strength of the fan remarkably lowers.

Referring to Figs. 48 and 49, however, gates 66 are arranged in the positions on connection portion 31 continuing to the base portions of blades 21, and particularly in the positions near front edge 21b, and this structure can form weld line 67 in the illustrated position that does not significantly lower the breaking strength of the fan. Consequently, the lowering of the breaking strength of the fan can be prevented.

Then, description will be given on an outdoor unit of an air conditioner as an example of a fluid feeder having propeller fan 10 according to the first example.

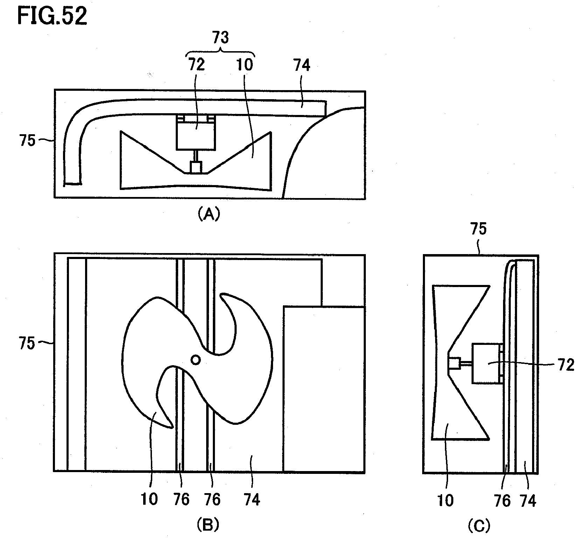

Fig. 52 shows an outdoor unit of an air conditioner with the propeller fan in Fig. 1. Referring to Fig. 52, an outdoor unit 75 of the air conditioner includes a blower 73 having propeller fan 10 according to the first example and a drive motor 72. Blower 73 feeds a fluid. Outdoor unit 75 has an outdoor heat exchanger 74, and performs efficient heat exchange, using blower 73. Blower 73 is arranged in outdoor unit 75 by a motor angle 76.

In this structure, outdoor unit 75 has propeller fan 10 already described in connection with the first example, and therefore can suppress generation of noises to attain low operation noises.

Further, propeller fan 10 improves the air flow efficiency so that the energy consumption of outdoor unit 75 can be low. Similar effect can be achieved by using the propeller fan already described in connection with one of the second to sixth examples and seventh embodiment.

In this example, the outdoor unit of the air conditioner has been described as an example of the fluid feeder. However, substantially the same effect can be achieved by applying the propeller fan of the invention to various devices for feeding the fluid such as an air purifier, a humidifier, an electric fan, a fan heater, a cooling device and a ventilating device.

Technical ideas of the propeller fans described above can be summarized as follows. In some examples, a propeller fan has a plurality of blades for blowing air by rotation, wherein base portions of the plurality of blades are continuously coupled together.

Also, in some examples, a propeller fan has a plurality of blades for blowing air by rotation, and is characterized in that the propeller fan has a convex portion including a rotation shaft located coaxially to a rotation center of the blades and protruding toward an inlet side and/or an outlet side, and at least a part of the base portions of the blades is not continuously connected to the convex portion.

Further, in some examples, a propeller fan has a plurality of blades for blowing air by rotation, and is characterized in that the minimum length of the convex portion from the rotation center is smaller than the minimum length of the base portions of the blades from the rotation center. According to this structure, the convex portion is small so that the blades have a large area and the propeller fan has a small mass. Since the blades have the large area, the blades can be effectively used even in the rotation-central portion that is conventionally a dead angle region, and the air flow rate can be increased when the rotation speed is constant. Since the propeller fan has a small mass, this reduces a load on the motor, and can reduce the power consumption at the constant air flow rate.

Further, according to some examples, the propeller fan described above is characterized in that the propeller fan includes a front edge located on a forward side in the rotational direction, a rear edge located on the opposite side in the rotational direction and a peripheral portion extending in a circumferential direction between a tip end portion of the front edge and a tip end portion of the rear edge, and the base portion of the front edge of each of blades and the base portion of the rear edge of the neighboring blade match with each other and are continuously coupled together.

Further, according to some examples, the propeller fan described above is characterized in that the front edge of each of the plurality of blades is coupled in a direction from the intake side to the outlet side to the rear edge of the neighboring blade.

Further, according to some examples, the propeller fan described above is characterized in that the rear edge has a concave portion (recessed portion) extending toward the front edge, line between the opposite ends of the concave portion, or a common tangential line with respect to the opposite ends that are nor clear has a length equal to or larger than 0.33 times the outer diameter of the fan, and a length from the line between the opposite ends of the concave portion or from the above tangential line to the deepest position of the concave portion is equal to or smaller than 0.068 times the outer diameter of the fan. This structure reduces the area of the blades to reduce effectively a drag. Since the area of the blades decreases, the air flow rate decreases when the rotation speed is constant, but the drag effectively decreases so that the power consumption can be reduced when the air flow rate is constant. It is assumed that X (the width of the concave portion) indicates the length of the line between the opposite ends of the concave portion or the length of the above tangential line, and Y (depth of the concave portion) indicates the length from the line between the opposite ends of the concave portion or from the above tangential line to the deepest position of the concave portion. When Y changes while X is substantially constant, the ratio of the air flow rate with respect to a constant rotation speed decreases, and the ratio of input with respect to a constant air flow rate is substantially constant. Therefore, it is desirable to reduce Y. When X changes while Y is substantially constant, the ratio of the air flow rate with respect to a constant rotation speed decreases, and the ratio of input with respect to a constant air flow rate decreases. Therefore, it is desired to decrease X when the air flow rate with respect to a constant rotation speed is to be increased, and to increase X when the air flow rate with respect to a constant rotation speed is to be reduced.

Further, according to some examples, the propeller fan described above is characterized in that it is molded from resin. This structure can provide the blade portion having a section of a blade-like form in contrast to the case where it is made of metal. Further, this structure can reduce a mass of the propeller fan of large sizes. Since this structure can provide the blade portion having a section of a blade-like form in contrast to the case where it is made of metal, the blowing performance can be improved. Since this structure can reduce a mass of the propeller fan of large sizes, the load on the motor can be reduced, and the power consumption can be reduced.

Further, some examples relate to a fluid feeder provided with the propeller fan described above.

Further, some examples relate to a molding die for molding the propeller fan described above from resin.

In some examples, a propeller fan has a plurality of blades for blowing air by rotation, and has a connection portion continuously coupling base portions of the plurality of blades, and is characterized in that the propeller fan has a convex portion including a rotation shaft located coaxially to a rotation center of the blades and protruding toward an inlet side and/or an outlet side, a circumferential width of the base portion of the blade is smaller than a circumferential width of the convex portion, and a rotation center portion on the outlet side is provided with a flat surface portion larger than a circumferential width of the convex portion on the intake side.

This structure can improve the blowing performance of the propeller fan, and allows axial stacking (i.e., stacking in the direction of height) of the propeller fans by a very simple manner for storing or transporting them.

Further, in some examples, a propeller fan has a plurality of blades for blowing air by rotation, and has a connection portion continuously coupling base portions of the plurality of blades, and is characterized in that the propeller fan has a convex portion including a rotation shaft located coaxially to a rotation center of the blades and protruding toward an inlet side and/or an outlet side, a circumferential width of the base portion of the blade is smaller than a circumferential width of the convex portion, a rotation center portion on the outlet side is provided with an annular protrusion, and a circumferential width of an inner side of the annular protrusion is equal to or larger than a circumferential width of the outer side of the convex portion on the intake side.

This structure can improve the blowing performance of the propeller fan. Also, horizontal shifting or deviation can be prevented so that this structure allows axial and stable stacking (i.e., stable stacking in the direction of height) of the propeller fans for storing or transporting them. Further, a balance piece may be attached to the annular protrusion for eliminating imbalance of the propeller fan.

Further, in some examples, a propeller fan has a plurality of blades for blowing air by rotation, and has a connection portion continuously coupling base portions of the plurality of blades, and is characterized in that the propeller fan has a convex portion including a rotation shaft located coaxially to a rotation center of the blades and protruding toward an inlet side and/or an outlet side, a circumferential width of the base portion of the blade is smaller than a circumferential width of the convex portion, and an annular protrusion is arranged on a radially outer side of the convex portion on the intake side.

When the annular protrusion on the intake side has an axial height larger than a height of the convex portion, the above structure improves the blowing performance of the propeller fan, and allows stacking (i.e., stacking in the direction of height) of the propeller fans for storing or transporting them. Further, when the annular protrusion on the intake side has an axial height smaller than a height of the convex portion, a balance piece may be attached to the annular protrusion for eliminating imbalance of the propeller fan.

Further, according to some examples, the propeller fan described above is characterized in that it is molded from resin. This structure can provide the blade portion having a section of a blade-like form in contrast to the case where it is made of metal. Further, this structure can reduce a mass of the propeller fan of large sizes. Since this structure can provide the blade portion having a section of a blade-like form in contrast to the case where it is made of metal, the blowing performance can be improved. Since this structure can reduce a mass of the propeller fan of large sizes, the load on the motor can be reduced, and the power consumption can be reduced.

Further, in some examples, a fluid feeder is provided with the propeller fan described above.

Further, in some examples, a molding die for molding the propeller fan described above from resin.

Although the present invention has been described and illustrated in detail, it is clearly understood that the same is by way of illustration and example only and is not to be taken by way of limitation, the scope of the present invention being interpreted by the terms of the appended claims.

### INDUSTRIAL APPLICABILITY

The present invention is primarily applied to a fluid feeder such as an outdoor unit of an air conditioner, an air purifier, a humidifier, a dehumidifier, a fan heater, a cooling device and a ventilating device.

## Claims

1. A propeller fan (57) including a plurality of blades (21) circumferentially spaced from each other for performing blowing according to rotation around an imaginary center axis, wherein:
each of said blades (21) has a front edge (21b) located on a forward side in a rotational direction of the propeller fan;
when an imaginary circle (102) is drawn around said center axis to separate said plurality of blades (21) from each other in the circumferential direction, a connection portion (31) is defined inside the imaginary circle (102) and the blades (21) are defined outside the imaginary circle;
when the propeller fan (57) is viewed in a direction of said center axis, said front edge (21b) is provided with a first convex portion (58) having a round form protruding toward an intake side of each of said blades (21), when viewed from the intake side, the convex portion (58) has a curved surface rising from a surface (26) of the blade (21); and
said first convex portion (58) is located outside the imaginary circle; **characterised in that** said first convex portion (58) is formed only near the periphery of the connection portion (31).

2. A propeller fan (57) according to claim 1, wherein:
each of said blades (21) has a rear edge (21c) located on a side opposite to a forward side in a rotational direction of the propeller fan (57),
said rear edge (21c) is provided with a second convex portion (59) protruding oppositely to the rotational direction of each of said blades (21).

3. A propeller fan (57) according to claim 1 or 2, wherein:
each of said blades (21) has a rear edge (21c) located at a side opposite to a forward side in a rotational direction of the propeller fan (57), and
a coupling portion between said rear edge (21c) and an outer peripheral portion of each of said blades (21) is provided with a third convex portion (60) protruding oppositely to the rotational direction of each of said blades (21).

## Patentansprüche

1. Propellergebläse (57), umfassend eine Vielzahl von Flügeln (21), die in Umfangsrichtung voneinander beabstandet sind, um Blasen gemäß Drehung um eine imaginäre Mittelachse auszuführen, wobei:
jeder der Flügel (21) eine Vorderkante (21b) aufweist, die in einer Drehrichtung des Propellergebläses auf einer vorderen Seite liegt;
wenn ein imaginärer Kreis (102) um die Mittelachse gezogen wird, um die Vielzahl von Flügeln (21) in der Umfangsrichtung voneinander zu trennen, ein Verbindungsabschnitt (31) in dem imaginären Kreis (102) definiert ist und die Flügel (21) außerhalb des imaginären Kreises definiert sind;
wenn das Propellergebläse (57) in einer Richtung der Mittelachse betrachtet wird, die Vorderkante (21b) mit einem ersten konvexen Abschnitt (58) versehen ist, der eine in Richtung einer Ansaugseite jedes der Flügel (21) vorstehende runde Form aufweist und bei Betrachtung von der Ansaugseite der konvexe Abschnitt (58) eine sich von einer Oberfläche (26) des Flügels (21) erhebende gekrümmte Oberfläche aufweist; und
der erste konvexe Abschnitt (58) außerhalb des imaginären Kreises liegt;
**dadurch gekennzeichnet, dass** der erste konvexe Abschnitt (58) nur in der Nähe der Umrandung des Verbindungsabschnitts (31) gebildet ist.

2. Propellergebläse (57) nach Anspruch 1, wobei:
jeder der Flügel (21) eine Hinterkante (21c) aufweist, die in einer Drehrichtung des Propellergebläses (57) auf einer der vorderen Seite gegenüberliegenden Seite liegt;
die Hinterkante (21c) mit einem zweiten konvexen Abschnitt (59) versehen ist, der entgegen der Drehrichtung jedes der Flügel (21) vorsteht.

3. Propellergebläse (57) nach Anspruch 1 oder 2, wobei:
jeder der Flügel (21) eine Hinterkante (21c) aufweist, die in einer Drehrichtung des Propellergebläses (57) auf einer einer vorderen Seite gegenüberliegenden Seite liegt, und
ein Kopplungsabschnitt zwischen der Hinterkante (21c) und einem äußeren Umrandungsabschnitt jedes der Flügel (21) mit einem dritten konvexen Abschnitt (60) versehen ist, der entgegen der Drehrichtung jedes der Flügel (21) vorsteht.

## Revendications

1. Ventilateur hélicoïde (57) comprenant une pluralité de pales (21) espacées de manière circonférentielle les unes par rapport aux autres pour effectuer un soufflage en fonction de la rotation autour d'un axe central imaginaire, dans lequel :
chacune desdites pales (21) a un bord avant (21b) situé sur un côté avant dans une direction allant dans le sens de la rotation du ventilateur hélicoïde ;
quand un cercle imaginaire (102) est tracé autour dudit axe central pour séparer ladite pluralité de pales (21) les unes par rapport aux autres dans la direction allant dans le sens de la circonférence, une partie de raccordement (31) est définie à l'intérieur du cercle imaginaire (102) et les pales (21) sont définies à l'extérieur du cercle imaginaire ;
quand le ventilateur hélicoïde (57) est vu dans une direction dudit axe central, ledit bord avant (21b) comporte une première partie convexe (58) ayant une forme ronde faisant saillie vers un côté d'entrée de chacune desdites pales (21), quand vu depuis le côté d'entrée, la partie convexe (58) a une surface incurvée allant en montant depuis une surface (26) de la pale (21) ; et
ladite première partie convexe (58) est située à l'extérieur du cercle imaginaire ;
**caractérisé en ce que** ladite première partie convexe (58) est formée uniquement près de la périphérie de la partie de raccordement (31).

2. Ventilateur hélicoïde (57) selon la revendication 1, dans lequel :
chacune desdites pales (21) a un bord arrière (21c) situé sur un côté opposé à un côté avant dans une direction allant dans le sens de la rotation du ventilateur hélicoïde (57),
ledit bord arrière (21c) comporte une deuxième partie convexe (59) faisant saillie à l'opposé de la direction allant dans le sens de la rotation de chacune desdites pales (21).

3. Ventilateur hélicoïde (57) selon la revendication 1 ou la revendication 2, dans lequel :
chacune desdites pales (21) a un bord arrière (21c) situé au niveau d'un côté opposé à un côté avant dans une direction allant dans le sens de la rotation du ventilateur hélicoïde (57), et
une partie d'accouplement entre ledit bord arrière (21c) et une partie périphérique extérieure de chacune desdites pales (21) comporte une troisième partie convexe (60) faisant saillie à l'opposé de la direction allant dans le sens de la rotation de chacune desdites pales (21).
